Europäisches Patentamt

(19) European Patent Office

Office européen des brevets

(11) Numéro de publication : **0 036 358 B1**

(12) # FASCICULE DE BREVET EUROPÉEN

(45) Date de publication du fascicule du brevet :
04.07.84

(21) Numéro de dépôt : **81400360.4**

(22) Date de dépôt : **09.03.81**

(51) Int. Cl.³ : **B 23 Q 35/13**

(54) **Procédé de positionnement d'un organe par rapport à une surface métallique et à une discontinuité formée sur cette surface et dispositif de mise en oeuvre de ce procédé.**

(30) Priorité : **17.03.80 FR 8005909**

(43) Date de publication de la demande :
**23.09.81 Bulletin 81/38**

(45) Mention de la délivrance du brevet :
**04.07.84 Bulletin 84/27**

(84) Etats contractants désignés :
**BE DE FR GB IT SE**

(56) Documents cités :
**FR-A- 1 250 110**
**FR-A- 2 107 758**
**US-A- 3 076 889**
**US-A- 4 143 310**

(73) Titulaire : **COMMISSARIAT A L'ENERGIE ATOMIQUE**
**Etablissement de Caractère Scientifique Technique et Industriel**
**B.P. 510**
**F-75752 Paris Cedex 15 (FR)**

(72) Inventeur : **Bosquain, Denis**
**6, rue Foucault**
**F-75016 Paris (FR)**
Inventeur : **Cornu, Jean**
**34, route de Verton**
**F-44200 Nantes (FR)**
Inventeur : **Detriche, Jean-Marie**
**6, Bois de la Ferme**
**F-78240 Chambourcy (FR)**
Inventeur : **Marchal, Paul**
**1-13 Résidence du Parc du Château de Courcelles**
**F-91190 Gif-Sur-Yvette (FR)**

(74) Mandataire : **Mongrédien, André et al**
**c/o BREVATOME 25, rue de Ponthieu**
**F-75008 Paris (FR)**

**0 036 358**

**Description**

La présente invention a pour objet un procédé de positionnement d'un organe par rapport à une surface métallique et par rapport à une discontinuité formée sur cette surface, ainsi qu'un dispositif pour la mise en œuvre de ce procédé.

De façon plus précise, l'invention se rapporte au problème du positionnement automatique d'un organe tel qu'une tête de soudage par rapport à la surface des pièces à souder et à la discontinuité que constitue le joint séparant ces pièces. Cependant, cette application n'est pas limitative et l'invention peut être utilisée pour résoudre tout problème de positionnement d'un organe par rapport à une surface métallique en vis-à-vis et/ou à une discontinuité formée sur cette surface. L'invention se rapporte aussi au contrôle de ce positionnement.

Par positionnement d'un organe au moyen du procédé selon l'invention, il faut entendre que l'on réalise la mesure de l'une ou plusieurs des trois grandeurs géométriques suivantes et éventuellement le calage automatique de cet organe sur une valeur prédéterminée de la ou des grandeurs considérées.

— la distance h séparant ledit organe de la surface,

— l'angle d'inclinaison $\alpha$ dudit organe par rapport à la normale à cette surface, en un point donné,

— le décalage latéral d dudit organe par rapport à une discontinuité formée sur cette surface.

Selon l'invention, dans l'application à une tête de soudage, il est ainsi possible de positionner la torche en hauteur et en angle par rapport à la surface sur laquelle se situe le joint à souder et de placer la torche dans l'alignement de ce joint. Cependant, ces trois fonctions ne sont pas nécessairement réalisées simultanément sur une même machine. Ainsi, l'invention se rapporte également, d'une part, à une machine utilisant un dispositif permettant de positionner un organe par rapport à une discontinuité de surface sans que l'organe soit réglable en hauteur ou angulairement et, d'autre part, à une machine équipée à l'inverse d'un dispositif permettant de positionner un organe à une certaine distance et avec une orientation donnée par rapport à une surface. L'invention se rapporte aussi à une machine permettant de contrôler le positionnement d'un tel organe.

Dans cet esprit, l'invention peut équiper tous les robots industriels qui exigent un positionnement précis en hauteur et en angle par rapport à une surface et selon une direction latérale par rapport à une discontinuité présentée par cette surface.

Le développement de la robotique correspond à la nécessité d'augmenter la production dans tous les domaines industriels où l'utilisation de machines spéciales n'est pas nécessaire. Ce développement correspond aussi à la réduction des contraintes d'organisation et de planification des fabrications de petites et moyennes séries. La robotique permet également de réduire les investissements en utilisant des machines adaptatives qui remplacent des machines spéciales destinées au traitement d'un même produit en grande série. Enfin, la robotique permet de résoudre des problèmes engendrés par des difficultés techniques ou par des travaux insalubres ou dangereux.

L'industrie a un grand besoin de ces moyens évolués de manutention, manipulation ou fabrication. En particulier, le soudage à l'arc, avec ou sans métal d'apport, soulève aujourd'hui de nombreux problèmes spécifiques qui rendent nécessaire le développement de robots adaptés à cette technique. Dans le domaine du soudage, il est souvent nécessaire de réaliser le suivi du joint à souder entre deux tôles avec une très grande précision, de façon rapide et reproductible. On sait en effet que l'assemblage par soudage d'un grand nombre d'éléments, avec une grande précision, sans possibilité de reprise ou d'erreur, nécessite une main-d'œuvre très qualifiée et rare. Il est souvent impossible d'assurer une production intensive en raison de la fatigue et de la contrainte physique résultant de la précision demandée. Lorsque les pièces à souder sont de très grande dimension, il est souvent nécessaire qu'elles soient préchauffées avant soudage, ce qui oblige le soudeur à revêtir une protection spéciale pour les approcher. Il en résulte des conditions de travail insalubres et dangereuses. Lorsque le soudage est effectué entre des éléments déformables à la chaleur, toute machine spéciale de soudure programmée sur une trajectoire très précise ne peut s'adapter à ces déformations qui peuvent atteindre plusieurs centimètres dans certains cas.

Il résulte de ces observations que dans de nombreux domaines industriels utilisant la robotique, il est nécessaire de disposer de système de positionnement par rapport à une surface et par rapport à une discontinuité formée sur cette surface, permettant la commande de robots qui doivent déterminer leur position par rapport à cette discontinuité ou cette surface avec une bonne précision et éventuellement se caler en position par ce moyen. De plus, il est nécessaire dans de nombreuses applications telles que le positionnement d'une tête de soudage de pouvoir disposer d'un système présentant une sensibilité aussi élevée que possible et surtout une bonne immunité aux parasites, ce qui exclut notamment l'utilisation de systèmes utilisant des circuits de traitement d'amplitude, tels que les systèmes décrits dans les documents FR-A-2 107 758, FR-A-1 250 110 et US-A-3 076 889.

Afin de répondre à ces besoins, l'invention a pour objet un procédé de positionnement d'un organe par rapport à une surface métallique au moyen d'un détecteur à courants de Foucault, selon l'une au moins des trois grandeurs géométriques que sont la distance h à cette surface, l'angle d'inclinaison $\alpha$ par rapport à la normale de cette surface et le décalage latéral d par rapport à une discontinuité formée sur cette surface, le détecteur comprenant au moins une sonde à courants de Foucault comportant deux

2

**0 036 358**

bobines incorporées dans un pont de mesure alimenté par un premier signal, selon lequel on dispose les bobines symétriquement par rapport à la normale à la surface, et on engendre au moins un signal continu fonction de la différence de phase entre le premier signal et le signal aux bornes des bobines, ce signal continu variant avec l'une desdites grandeurs géométriques en s'annulant pour une valeur donnée de cette grandeur et, on commande le déplacement dudit organe en fonction de la valeur du ou des signaux continus, de façon à donner à la grandeur géométrique sur laquelle on veut se positionner la valeur souhaitée, ce procédé étant caractérisé en ce que l'on engendre ledit signal continu en ajoutant au signal aux bornes des bobines, un signal déphasé de $\varphi$ par rapport au premier signal, puis en comparant en phase le signal ainsi obtenu au premier signal dans un discriminateur de phases conçu de telle manière que, lorsque ses entrées sont déphasées de $\varphi$, sa sortie est nulle.

De préférence, le premier signal est un signal sinusoïdal dont la fréquence est 240 kHz.

Selon une première variante de réalisation de l'invention, le signal continu s'annule et change de signe lorsque la grandeur géométrique correspondante atteint ladite valeur donnée qui correspond à la valeur de cette grandeur sur laquelle on souhaite positionner ledit organe, la distance et le sens du déplacement dudit organe étant déterminés par l'intensité et le signe du signal continu. Cette première variante peut être utilisée pratiquement dans tous les cas d'asservissement qui commandent le déplacement du détecteur.

Lorsque ce procédé est appliqué au positionnement dudit organe par rapport à une discontinuité formant une ligne sur ladite surface, le signal continu est un signal représentatif de la différence de phase entre le premier signal alimentant le pont de mesure et un signal résultant du traitement des signaux aux bornes des bobines de la sonde et le déplacement dudit organe s'effectue selon une direction transversale par rapport à la discontinuité, le signal continu s'annulant lorsque l'axe de la sonde est à une distance prédéterminée ($d_0$) du centre de la discontinuité (symétrie des courants de Foucault induits).

Lorsque ce procédé est appliqué au positionnement de l'organe par rapport à la normale en un point donné à la surface, le signal continu est également un signal représentatif de la différence de phase entre le premier signal alimentant le pont de mesure et un signal résultant du traitement des signaux aux bornes des bobines de la sonde et le déplacement dudit organe est un pivotement autour d'un axe contenu dans le plan perpendiculaire au plan des bobines ou à leur plan de symétrie et perpendiculaire à l'axe de la sonde, le signal continu s'annulant lorsque l'axe de la sonde forme un angle prédéterminé ($\alpha_0$) avec la normale à la surface.

Toujours lorsque ce procédé est appliqué au positionnement dudit organe par rapport à la normale en un point donné de la surface, le signal continu peut aussi être un signal correspondant à la différence entre deux signaux intermédiaires, ces derniers étant représentatifs des différences de phases entre chacun des signaux aux bornes des bobines et le premier signal alimentant le pont de mesure, et en ce que le déplacement dudit organe est un pivotement autour d'un axe contenu dans le plan perpendiculaire au plan des bobines ou à leur plan de symétrie et perpendiculaire à l'axe de la sonde, le signal continu s'annulant lorsque l'axe de la sonde forme un angle prédéterminé avec la normale à la surface.

Enfin, lorsque le procédé selon l'invention est appliqué au positionnement dudit organe à une distance $h_0$ donnée de la surface, le signal continu est un signal correspondant à la somme de deux signaux intermédiaires, ces derniers étant représentatifs des différences de phases entre chacun des signaux aux bornes des bobines et le signal alimentant le pont de mesure et le déplacement dudit organe s'effectue selon une direction longitudinale par rapport à son axe, le signal continu s'annulant lorsque le détecteur se trouve à ladite distance $h_0$ donnée de la surface.

Conformément à une seconde variante de réalisation de l'invention, qui peut notamment être utilisée lorsque les moyens d'asservissement commandant le déplacement de l'organe fonctionnent en numérique, on mémorise la courbe de variation du ou des seconds signaux en fonction de la grandeur correspondante, ou une courbe dérivée, on mesure la valeur instantanée de la grandeur géométrique sur laquelle on désire se positionner en déterminant la valeur correspondante du ou des seconds signaux et en reportant cette valeur sur la courbe mémorisée. Selon le deuxième mode de mise en œuvre du procédé, on commande le déplacement dudit organe en fonction de la différence entre cette valeur mesurée et une valeur de consigne.

Dans ce cas, lorsque le procédé est appliqué au positionnement latéral d dudit organe par rapport à une discontinuité formée sur la surface, le signal continu comprend un signal représentatif de la différence de phase entre le premier signal alimentant le pont de mesure et le signal résultant du traitement des signaux aux bornes des bobines de la sonde, et un signal correspondant à la différence entre deux signaux intermédiaires, ces signaux étant représentatifs des différences de phases entre chacun des signaux aux bornes des bobines et le signal alimentant le pont de mesure.

Lorsque le procédé selon l'invention est appliqué au positionnement angulaire $\alpha$ dudit organe par rapport à la normale à la surface, le signal continu comprend un signal représentatif de la différence de phase entre le premier signal alimentant le pont de mesure et le signal résultant du traitement des signaux aux bornes des bobines de la sonde, qui varie avec l'angle d'inclinaison $\alpha$, et un signal correspondant à la somme de deux signaux intermédiaires, ces derniers étant représentatifs des différences de phases entre chacun des signaux aux bornes des bobines de la sonde et le premier signal alimentant le pont de mesure, ce signal variant avec la distance h séparant ledit organe de la surface, et on mémorise la courbe de variation du signal représentatif de la différence de phase en fonction du signal représentatif de la

3

somme des signaux pour différentes valeurs de l'angle α. Ce double traitement des signaux est justifié par le fait qu'il est nécessaire pour déterminer l'angle d'inclinaison α de tenir compte de la distance h séparant l'organe positionné de la surface en vis-à-vis.

Toujours lorsque ce procédé est appliqué au positionnement angulaire α dudit organe par rapport à la normale à la surface, le signal continu est un signal correspondant à la différence entre deux signaux intermédiaires, ces derniers étant représentatifs des différences de phases entre chacun des signaux aux bornes des bobines et le premier signal alimentant le pont de mesure.

Enfin, lorsque le procédé selon l'invention est appliqué au réglage de la distance h séparant ledit organe de la surface, le signal continu est un signal correspondant à la somme de deux signaux intermédiaires, ces derniers étant représentatifs des différences de phases entre chacun des signaux aux bornes des bobines de la sonde et le premier signal alimentant le pont de mesure.

Selon une troisième variante de réalisation de l'invention, le signal continu s'annule ou prend une valeur donnée lorsque la grandeur géométrique correspondante atteint ladite valeur donnée, on mémorise la valeur d'un troisième signal représentatif de la position de la sonde en fonction de la grandeur que l'on souhaite régler, pour laquelle le signal continu s'annule ou prend une valeur donnée, et on mesure cette grandeur géométrique en comparant la valeur réelle du troisième signal à la valeur mémorisée avant de commander le déplacement dudit organe en fonction de cette valeur mesurée.

Lorsque cette troisième variante s'applique au positionnement angulaire α dudit organe par rapport à la normale en un point donné à la surface, le signal continu est un signal représentatif de la différence de phase entre le premier signal alimentant le pont de mesure et le signal résultant du traitement des signaux aux bornes des bobines de la sonde, qui varie avec l'angle d'inclinaison α. On mémorise alors le signal représentatif de la position de la sonde correspondant à un angle $α_0$ connu que fait son axe avec la normale à la surface pour laquelle le signal continu a une valeur donnée, et on mesure l'angle d'inclinaison α en comparant le signal représentatif de la position de la sonde à la valeur mémorisée de ce signal.

Toujours lorsque cette troisième variante s'applique au positionnement angulaire α dudit organe par rapport à la normale en un point donné à la surface, le signal continu peut être un signal qui correspond à la différence entre deux signaux intermédiaires, ces derniers étant représentatifs des différences de phases entre chacun des signaux aux bornes des bobines et le premier signal alimentant le pont de mesure, ce signal variant avec l'angle d'inclinaison, caractérisé en ce qu'on mémorise un signal représentatif de la position de la sonde correspondant à un angle que fait son axe avec la normale à la surface, pour laquelle le signal continu a une valeur donnée, et en ce qu'on mesure l'angle d'inclinaison en comparant le signal représentatif de la position de la sonde à la valeur mémorisée de ce signal.

Lorsque cette troisième variante s'applique au positionnement dudit organe par rapport à une discontinuité formant une ligne sur la surface, le signal continu est un signal représentatif de la différence de phase entre le premier signal alimentant le pont de mesure et le signal résultant du traitement des signaux aux bornes des bobines de la sonde, qui varie avec la distance d. On mémorise alors le signal **représentatif de la position de la sonde correspondant à une distance $d_0$ connue de l'axe de la sonde par rapport au milieu de la discontinuité** pour laquelle le signal continu a une valeur connue, et on mesure la distance d en comparant le signal représentatif de la position de la sonde à la valeur mémorisée de ce signal.

Lorsque cette troisième variante s'applique au positionnement dudit organe à une distance h séparant ledit organe de la surface, le signal continu est un signal correspondant à la somme de deux signaux intermédiaires, ces derniers étant représentatifs des différences de phases entre chacun des signaux aux bornes des bobines de la sonde et le signal alimentant le pont de mesure de sorte que ce second signal varie avec la distance h. On mémorise alors le signal représentatif de la position de la sonde **correspondant à une distance $h_0$ connue séparant ledit organe de la surface, pour laquelle le signal** continu a une valeur connue, et on mesure la distance h en comparant le signal représentatif de la position de la sonde à la valeur mémorisée de ce signal.

L'invention a également pour objet un dispositif de positionnement d'un organe par rapport à une surface au moyen d'un détecteur à courant de Foucault, notamment selon l'une au moins des trois grandeurs géométriques que sont la distance h à cette surface, l'angle d'inclinaison α par rapport à la normale à cette surface et le décalage latéral d par rapport à une discontinuité formée sur cette surface le détecteur comprenant au moins une sonde à courants de Foucault comportant deux bobines incorporées dans un pont de mesure alimenté par un premier signal, les bobines étant disposées symétriquement par rapport à un axe contenu dans un plan normal à la surface et passant par la discontinuité, le dispositif comprenant des moyens de traitement délivrant un signal continu fonction de la différence de phase entre le premier signal et le signal aux bornes des bobines, ce signal continu variant avec l'une desdites grandeurs géométriques (h, α, d) en s'annulant pour une valeur donnée de cette grandeur, et des moyens pour commander le déplacement dudit organe en fonction de la valeur du second signal, ce dispositif étant caractérisé en ce que les moyens de traitement comprennent des moyens pour ajouter au signal aux bornes des bobines un signal correspondant au signal injecté dans le pont, déphasé de φ, et un discriminateur de phases sensible au signal ainsi obtenu et au signal injecté dans le pont de mesure pour délivrer un signal de sortie qui s'annule lorsque ses entrées sont déphasées de φ.

On décrira maintenant, à titre d'exemple non limitatif, différentes variantes de réalisation de l'invention qui peuvent être soit réalisées isolément, soit en combinaison dans un même dispositif comme on le verra par la suite, en se référant aux dessins annexés dans lesquels :

la figure 1 est une vue schématique, en perspective, qui représente un dispositif selon l'invention permettant à la fois de régler la hauteur et l'inclinaison du détecteur par rapport à deux tôles à souder, et de disposer celui-ci en vis-à-vis du joint entre les deux tôles, la torche de soudage associée au détecteur n'étant pas représentée,

la figure 2 représente un premier circuit de traitement par différence de phase du signal délivré par le détecteur,

la figure 3 représente le circuit déphaseur logique utilisé dans le circuit de traitement représenté sur la figure 2,

la figure 4 représente le circuit discriminateur de phase utilisé dans le circuit de traitement de la figure 2,

la figure 5 montre la courbe de variation du signal de sortie $V_{ph}$ du circuit de traitement représenté sur la figure 2 en fonction du décalage latéral d de la sonde par rapport à une discontinuité de surface telle que le joint sur la figure 1,

la figure 6 montre la courbe de variation du signal de sortie $V_{ph}$ du circuit de traitement de la figure 2 ou du signal de sortie $V_d$ du circuit de traitement de la figure 7 en fonction de l'angle d'inclinaison $\alpha$ du détecteur par rapport à la normale à la surface de la pièce,

la figure 7 représente un deuxième circuit de traitement par différence de phase entre l'un ou l'autre des signaux délivrés par les bobines du détecteur et le signal délivré par un oscillateur HF, ce deuxième circuit pouvant être utilisé isolément ou en combinaison avec le circuit de traitement par mesure différentielle représenté sur la figure 2,

les figures 8a et 8b montrent la courbe de variation des signaux de sortie $V_s$ $V_{ph}$ et $V_{ph2}$ du circuit de traitement représenté sur la figure 7 en fonction de la distance h séparant le détecteur de la surface, pour deux réglages du circuit de traitement correspondant à l'annulation du signal $V_s$ lorsque la hauteur h est nulle et lorsque la hauteur h est égale à une valeur $h_0$ donnée,

la figure 9 représente le circuit d'asservissement de l'un des moteurs du dispositif représenté sur la figure 1 en fonction du signal délivré par l'un ou l'autre des circuits de traitement représentés sur les figures 2 et 7,

la figure 10 montre comment la sonde de mesure utilisée dans le dispositif de la figure 1 peut permettre de connaître l'inclinaison angulaire du détecteur par rapport à une surface en utilisant le circuit de traitement de la figure 7,

la figure 11 représente le circuit d'asservissement du détecteur qui doit notamment être utilisé lorsque l'asservissement fait appel à des courbes d'étalonnage préenregistrées,

la figure 12 montre une famille de courbes comparables à la courbe de la figure 5 représentant la variation du signal de sortie $V_{pk}$ du circuit de traitement de la figure 2 en fonction du décalage latéral d pour différentes valeurs de l'angle d'inclinaison $\alpha$ du détecteur,

la figure 13 montre la courbe de variation du signal de sortie $V_{ph}$ du circuit de la figure 2 en fonction du signal de sortie $V_s$ du circuit de la figure 7 pour différentes valeurs de l'angle d'inclinaison $\alpha$ du détecteur, et

la figure 14 représente un circuit d'asservissement particulier pouvant être utilisé pour le positionnement d'un organe. Ce circuit comprend une partie permettant une mémorisation d'information de position de référence et un circuit d'asservissement.

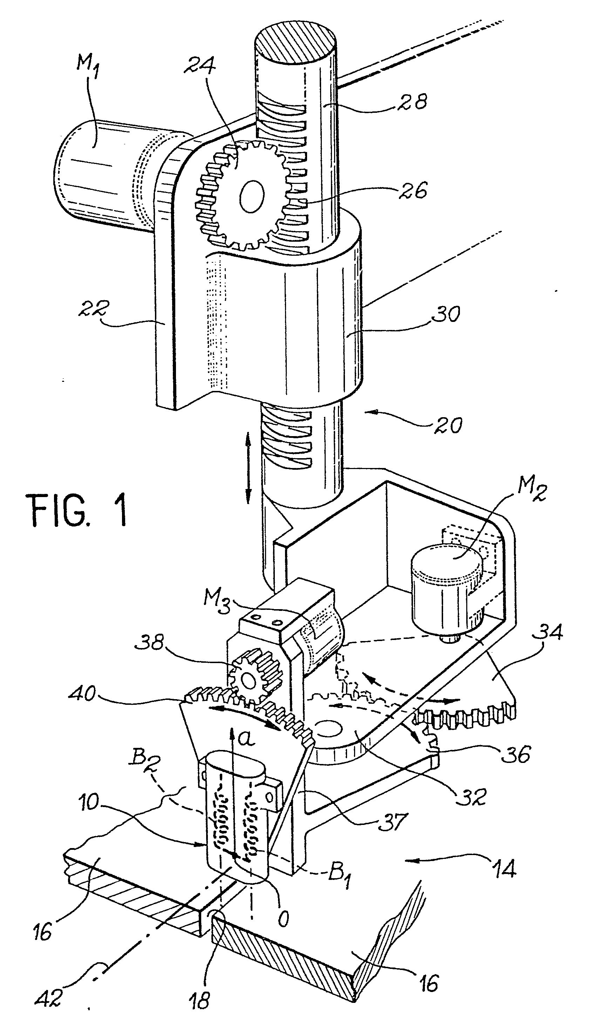

Pour faciliter l'exposé, le dispositif de positionnement représenté schématiquement et à titre d'exemple non limitatif sur la figure 1 permet de remplir simultanément les trois fonctions que sont le positionnement en hauteur d'un organe par rapport à une surface, l'orientation angulaire de cet organe par rapport à la normale à la surface et le positionnement latéral de cet organe par rapport à une discontinuité formée sur cette surface. Cependant, on comprendra que l'invention n'est pas limitée à un dispositif permettant de réaliser simultanément ces trois fonctions et s'applique également à tous dispositifs permettant de réaliser une ou deux quelconques de ces fonctions.

Toujours dans le but de simplifier l'exposé, on a représenté sur la figure 1, un détecteur comprenant une seule sonde à courants de Foucault. Cependant, comme on le verra par la suite, le détecteur peut comprendre en réalité deux sondes disposées par exemple à angle droit, notamment si l'on souhaite pouvoir positionner angulairement un organe dans deux plans orthogonaux.

Enfin, et toujours dans le but de simplifier l'exposé, le dispositif représenté sur la figure 1 ne comprend pas l'organe à positionner qui peut être notamment, comme on l'a vu, une torche de soudage. En réalité, on comprendra que cet organe peut être directement solidaire du détecteur, soit relié au détecteur par un mécanisme lui permettant de suivre le positionnement et l'orientation imposés au détecteur.

Comme on l'a déjà indiqué, le dispositif selon l'invention comprend un détecteur à courants de Foucault 10 qui se compose dans le cas le plus simple d'une sonde à courants de Foucault comme l'illustre la figure 1.

Rappelons que le principe d'une telle sonde consiste à alimenter une bobine par un courant électrique sinusoïdal haute fréquence, de manière à créer un champ alternatif qui induit dans une pièce en matériau conducteur de l'électricité disposée en vis-à-vis de la sonde des courants de Foucault créant

5

en retour un champ qui s'oppose au champ initial et modifie l'impédance de la bobine. Les variations de l'impédance de la bobine donnent donc une indication de la disposition de la bobine par rapport à la pièce en vis-à-vis et de la présence éventuelle d'une discontinuité sur cette pièce.

Conformément à l'invention, et afin de pouvoir effectuer une mesure différentielle permettant de déterminer l'orientation angulaire de la sonde et son positionnement par rapport à une surface ou à une discontinuité formée sur la surface, la sonde comprend deux bobines $B_1$ et $B_2$ dont les axes sont disposés dans un même plan et qui sont disposés de façon symétrique par rapport à un axe $\overrightarrow{Oa}$ définissant l'axe de la sonde. Dans la variante de réalisation représentée sur la figure 1, les axes des deux bobines $B_1$ et $B_2$ sont parallèles, de telle sorte qu'elles sont disposées toutes deux à égale distance par rapport à l'axe $\overrightarrow{Oa}$.

Bien entendu, d'autres variantes de réalisation peuvent être envisagées. D'une façon générale, toute disposition des bobines $B_1$ et $B_2$ conduisant à une symétrie des courants de Foucault induits peut être utilisée. En pratique, cela signifie que les bobines $B_1$ et $B_2$ sont symétriques par rapport à l'axe $\overrightarrow{Oa}$. Ainsi, les axes des bobines $B_1$ et $B_2$ peuvent être parallèles et disposés dans un plan normal à la discontinuité 18 comme l'illustre la figure 1, ou encore inclinées dans ce plan de façon à se couper selon l'axe $\overrightarrow{Oa}$ et à former avec ce dernier un angle $\beta$ donné. Les bobines $B_1$ et $B_2$ peuvent aussi être disposées dans un même plan selon l'une ou l'autre des dispositions précédentes, ce plan étant incliné par rapport à la normale à la surface 14 et coupant cette surface selon une ligne perpendiculaire à la discontinuité 18. Ces bobines $B_1$ et $B_2$ peuvent encore être disposées dans des plans symétriques par rapport au plan normal à la surface et perpendiculaires à la discontinuité, ces plans coupant la surface selon une ligne perpendiculaire à la discontinuité.

Enfin, les bobines peuvent être parallèles, mais décalées et disposées dans le plan normal à la surface et perpendiculaires à la discontinuité, de façon à ce que la distance h de chaque bobine à la surface soit la même lorsque les deux pièces 16 sont décalées l'une par rapport à l'autre.

On a représenté à titre d'exemple sur la figure 1, l'ensemble des moyens mécaniques permettant de positionner et d'orienter le détecteur 10 par rapport à une pièce 14 constituée sur la figure par deux tôles à souder 16 définissant entre elles un joint 18 qui doit être suivi par la torche de soudage (non représentée). Bien que les tôles 16 soient planes et que le joint 18 soit rectiligne sur la figure, on comprendra que l'invention peut être utilisée quelles que soient les formes de tôles et de la discontinuité.

Dans l'exemple de réalisation représenté, le détecteur 10 est porté par un mécanisme 20 permettant à la fois d'assurer son positionnement en hauteur et son orientation angulaire par rapport à la pièce 14 et d'assurer son positionnement latéral par rapport à la ligne de soudure 18.

Le mécanisme de positionnement 20 du détecteur comprend un bras de supportage 22 qui peut être soit fixe, soit mobile, afin de permettre le déplacement de la sonde par rapport à la pièce 14. Le bras 22 supporte un moteur électrique $M_1$ dont l'arbre de sortie est solidaire d'un pignon 24 qui s'engrène dans une crémaillère 26 formée sur une colonne verticale 28 guidée par un manchon 30 solidaire du bras 22, de façon à pouvoir se déplacer de bas en haut et de haut en bas sous l'action du moteur $M_1$. Ce premier ensemble permet de positionner le détecteur 10 en hauteur par rapport à la pièce 14.

La colonne 28 porte à son extrémité inférieure une plaque horizontale 32 qui supporte un deuxième moteur $M_2$ dont l'arbre de sortie entraîne en rotation un secteur circulaire denté 34 qui s'engrène sur un autre secteur denté 36 monté pivotant ainsi que le secteur 34 en dessous de la plaque 32. Ce deuxième ensemble permet de déplacer latéralement le détecteur 10 par rapport à la ligne de soudure 18.

Une plaque 37 solidaire du secteur denté 36 et s'étendant verticalement porte un troisième moteur $M_3$ dont l'arbre de sortie horizontal est solidaire d'un pignon 38 qui s'engrène sur un secteur circulaire denté 40 monté pivotant sur la plaque 37. Un axe horizontal 42 matérialisant l'axe de rotation du secteur 40 traverse la plaque 37 pour porter par son extrémité libre un détecteur dont les bobines sont disposées dans le plan orthogonal du plan de la sonde 10, l'axe 42 étant contenu dans le plan perpendiculaire au plan défini par les bobines $B_1$ et $B_2$ et coupant l'axe $\overrightarrow{Oa}$ au point O définissant l'extrémité inférieure de la sonde. Ce dernier mécanisme permet ainsi, par la mise en œuvre du moteur $M_3$, l'orientation angulaire du détecteur 10 autour de l'axe 42.

Dans une variante non représentée, lorsque l'on souhaite réaliser également une orientation angulaire de la sonde selon un axe horizontal perpendiculaire à l'axe 42, il est nécessaire de prévoir une sonde dont les bobines sont disposées dans le plan de la sonde 10 et définissent un axe confondu avec l'axe $\overrightarrow{Oa}$, et d'ajouter au mécanisme 20 une partie comparable à la partie actionnée par le moteur $M_3$, permettant de faire pivoter le détecteur autour d'un axe horizontal perpendiculaire à l'axe 42 donc autour du point O, dans le plan des bobines. Dans ce cas, la partie du mécanisme 20 actionnée par le moteur $M_3$ peut aussi être supprimée, le bras de supportage 22 étant alors fixé à un bras (de manipulateur) autorisant l'orientation angulaire du détecteur dans toutes les directions. Le détecteur 10 est alors fixé directement sur le secteur 36.

Comme on l'a déjà mentionné, les trois parties du mécanisme de positionnement 20 peuvent être dissociées. De plus, les fonctions de positionnement peuvent être remplies par des moyens différents de ceux qui viennent d'être décrits et selon un agencement qui peut être modifié ou même inversé.

En plus du détecteur 10 et du mécanisme de positionnement 20 représentés sur la figure 1, le dispositif de positionnement et d'orientation selon l'invention comprend des moyens de traitement électroniques des signaux délivrés par le détecteur et des moyens pour asservir le mécanisme 20 à l'aide

# 0 036 358

de la réponse fournie par les moyens de traitement, ces moyens d'asservissement agissant sur les moteurs $M_1$, $M_2$ ou $M_3$ selon le cas.

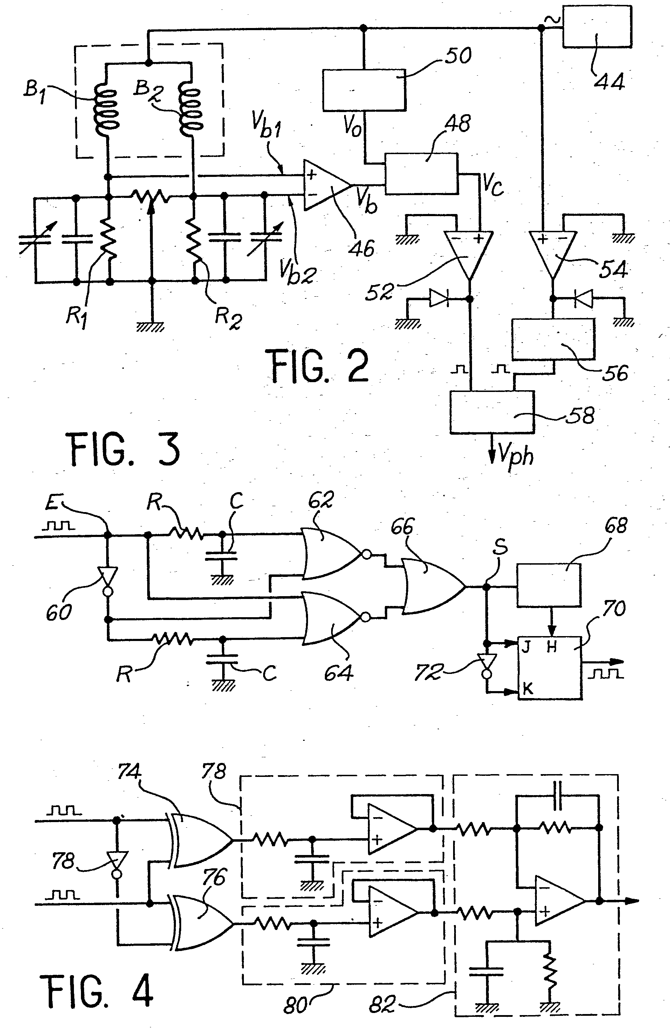

On a représenté sur la figure 2 un circuit de traitement électronique des signaux délivrés par une sonde à courants de Foucault à deux bobines $B_1$ et $B_2$ permettant d'effectuer une mesure différentielle utilisable en particulier pour le positionnement latéral de la sonde sur la ligne de soudure 18 et pour l'orientation angulaire de la sonde par rapport à la normale à la pièce 14 comme on le verra par la suite.

Afin de permettre la détection des variations de l'impédance de chacune des bobines $B_1$ et $B_2$ de la sonde, celles-ci sont placées dans un pont de mesure symétrique dont les deux branches $R_1$ et $R_2$ servent à assurer l'équilibre. Le pont de mesure ainsi constitué est alimenté entre le point haut défini par la jonction des bobines $B_1$ et $B_2$ et le point bas défini par la jonction des branches $R_1$ et $R_2$ par un signal sinusoïdal haute fréquence (par exemple 240 kHz) provenant d'un oscillateur H.F. 44. Les signaux de sortie sinusoïdaux $V_{b1}$ et $V_{b2}$ pris respectivement aux bornes communes des branches $B_1$ et $R_1$ et $B_2$ et $R_2$ sont transmis respectivement à la borne + et à la borne − d'un amplificateur différentiel 46 qui délivre un signal sinusoïdal $V_b$. Le signal $V_b$ est injecté dans un sommateur 48 avec un signal $V_0$ qui correspond au signal injecté dans le pont de mesure par l'oscillateur 44 et déphasé de $\pi/2$ par un déphaseur 50. Le **signal sinusoïdal $V_0$ délivré par le sommateur 48 est injecté à la borne + d'un comparateur 52 dont la borne − est connectée à la terre.** De même, le signal sinusoïdal délivré par l'oscillateur 44 est injecté à la borne + d'un autre comparateur 54 dont la borne − est également reliée à la terre. Les comparateurs 52 et 54 délivrent des signaux logiques positifs pour les alternances positives des signaux sinusoïdaux qui leur sont injectés. Le signal logique délivré par le comparateur 54 est représentatif des alternances du signal sinusoïdal délivré par l'oscillateur 44. Il est injecté dans un déphaseur logique 56 délivrant un signal déphasé d'une valeur donnée par rapport au signal d'entrée. Ce signal déphasé est à son tour injecté dans un discriminateur de phase 58 en même temps que le signal délivré par le comparateur 52, ce dernier étant représentatif de la valeur des signaux aux bornes des bobines $B_1$ et $B_2$. Le discriminateur de phase 58 délivre un signal $V_{ph}$ représentatif de la différence de phase entre le signal injecté dans le pont et celui aux bornes des bobines.

Comme le montre la figure 3, le déphaseur logique 56 comprend un inverseur 60 et deux circuits RC permettant de retarder le signal injecté en E dans le déphaseur et le signal sortant de l'inverseur 60. Le signal injecté dans le déphaseur et retardé par l'un des circuits RC, ainsi que le signal sortant de l'inverseur 60 sont injectés dans une première porte NON/OU 62. De même, le signal injecté en E dans le déphaseur 56 ainsi que le signal sortant de l'inverseur 60 et retardé par le second circuit RC sont injectés dans une seconde porte NON/OU 64. Les signaux délivrés par chacune des portes NON/OU 62 et 64 sont injectés dans une porte OU 66 qui délivre en S un signal logique dont chaque impulsion correspond au début et à la fin d'un créneau du signal injecté à l'entrée E du déphaseur 56. Ce signal logique est injecté à l'entrée d'un monostable 68, à l'entrée J d'une bascule JK 70 et, par l'intermédiaire d'un inverseur 72, à l'entrée K de cette dernière. Le signal de sortie du monostable 68, qui correspond à une suite de créneaux de durée déterminée débutant avec un retard déterminé par rapport à chaque impulsion du signal délivré en S, est injecté à l'entrée H de la bascule JK dont le signal de sortie délivré en Q est identique au signal injecté à l'entrée E du déphaseur mais déphasé selon une valeur déterminée par le retard imposé par le monostable 68. Ce signal de sortie est injecté dans le discriminateur de phase 58.

Comme le montre la figure 4, les deux entrées du discriminateur de phase 58 sont reliées, d'une part, à une porte OU EXCLUSIF 74 et, d'autre part, à une porte OU EXCLUSIF 76 après passage dans un inverseur 78 du signal provenant du déphaseur logique 56. La sortie de chacune des portes OU EXCLUSIF 74, 76 est reliée à un intégrateur 78, 80 dont les signaux de sortie, représentant la composante continue de chacun des signaux injectés à l'entrée du discriminateur de phase, sont injectés dans un soustracteur 82 délivrant un signal de sortie continu $V_{ph}$ dont la valeur correspond à la différence de phase entre le signal délivré par le déphaseur 56 et le signal issu du comparateur 52.

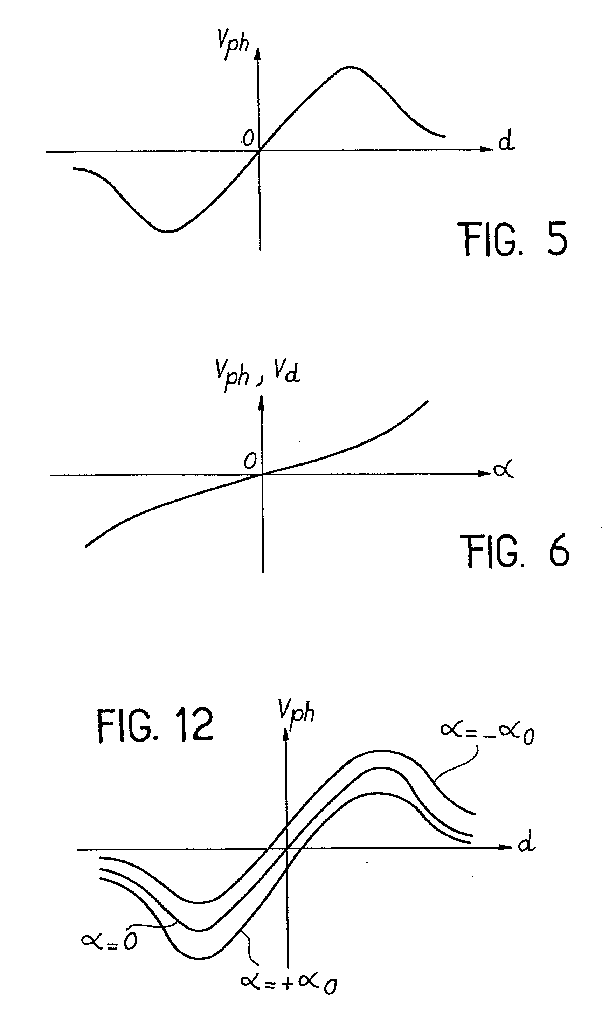

Les variations du signal $V_{ph}$ délivré par le premier circuit de traitement qui vient d'être décrit en se référant aux figures 2 à 4 en fonction du décalage latéral d de l'axe Oa de la sonde par rapport au milieu de la discontinuité 18 sont représentées sur la figure 5. Rappelons que le déplacement correspondant de la sonde 10 est obtenu au moyen du moteur $M_2$ sur la figure 1. La courbe de la figure 5 est remarquable, d'une part, par le fait que le signal $V_{ph}$ devient nul lorsque le décalage d est nul et, d'autre part, par le fait que le signal $V_{ph}$ est positif lorsque la sonde est décalée d'un côté par rapport à la discontinuité et négatif lorsque la sonde est décalée de l'autre côté par rapport à cette discontinuité. Ces deux particularités de la courbe de la figure 5 permettent de réaliser un repérage de la position et du sens de déplacement de la sonde par rapport à la discontinuité. Ainsi, quand la sonde se déplace transversalement par rapport à la discontinuité 18, et de la gauche vers la droite en considérant la figure 1, le signal $V_{ph}$ passera d'une tension négative à une tension positive.

On remarquera que la courbe de la figure 5 est tracée dans le cas où le déphasage des deux signaux appliqués au discriminateur de phase 58 est réglé de telle sorte que la tension $V_{ph}$ soit nulle lorsque le centre de la discontinuité 18 est placé exactement dans le prolongement de l'axe $\overrightarrow{Oa}$ de la sonde 10. Le réglage de ce déphasage s'effectue au moyen du déphaseur logique 56 en réglant de façon appropriée les **impulsions délivrées par le monostable 68** et notamment le retard de ces impulsions par rapport aux impulsions délivrées en S par la porte OU 66. En effet, le déphasage du signal délivré par l'oscillateur au moyen du déphaseur logique 56 permet de mettre ce signal en quadrature de phase avec le signal délivré

7

par le comparateur 52 lorsque l'axe $\overrightarrow{Oa}$ de la sonde passe par le milieu de la discontinuité 18, ce qui conduit à un signal de sortie $V_{ph}$ du discriminateur de phase 58 nul dans cette position. On comprendra qu'il est possible en réglant le déphaseur 56 de façon appropriée de décaler la courbe de la figure 5 afin d'annuler le signal $V_{ph}$ pour une valeur différente du décalage d, lorsqu'il est nécessaire de positionner un organe avec un décalage latéral $d_0$ donné par rapport à une discontinuité de surface.

On remarquera également que la courbe de la figure 5 est plus ou moins aplatie selon la valeur de la distance h qui sépare la sonde 10 de la surface 18. Ainsi, la sensibilité et donc la précision de la localisation de la discontinuité augmentent lorsque la sonde est plus proche de la surface des tôles. A l'inverse, la mesure n'est plus significative au-delà d'une certaine distance qui varie avec la nature de la pièce et par exemple la fréquence de travail (dans des conditions d'expérimentation particulières, cette distance a été d'environ 15 mm). En revanche, la largeur de la discontinuité à détecter est pratiquement sans incidence sur le positionnement de la sonde, dans la limite de la compatibilité avec la dimension du détecteur (écart entre les bobines).

On remarquera aussi que la courbe de réponse de la figure 5 est tracée dans le cas où l'axe du détecteur 10 est disposé selon la normale à la surface. Cette courbe se décale vers la droite ou vers la gauche lorsque l'axe du détecteur est incliné d'un angle α positif ou négatif par rapport à cette normale.

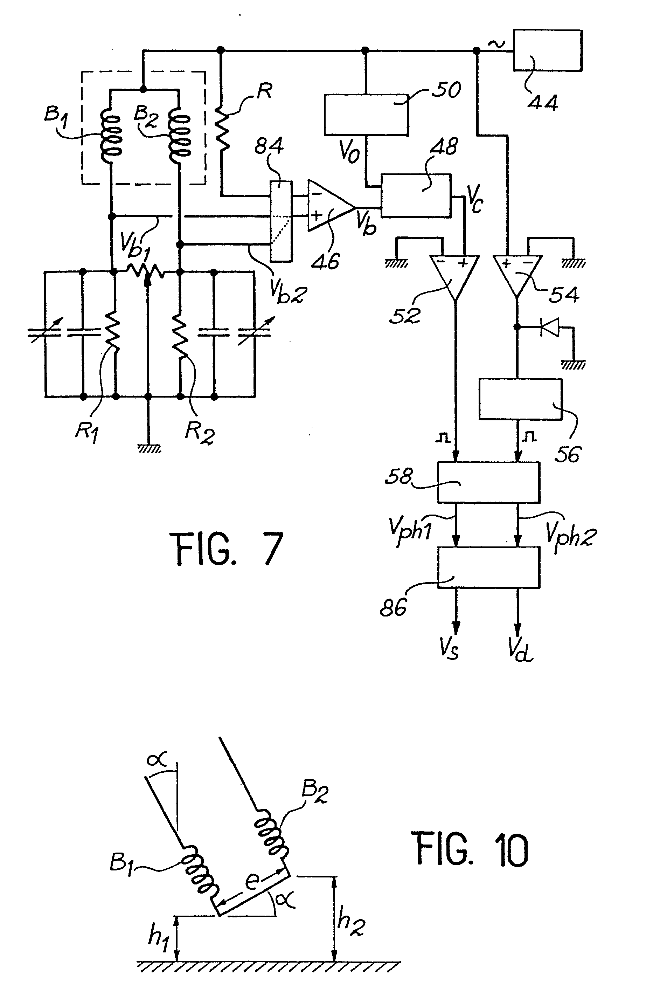

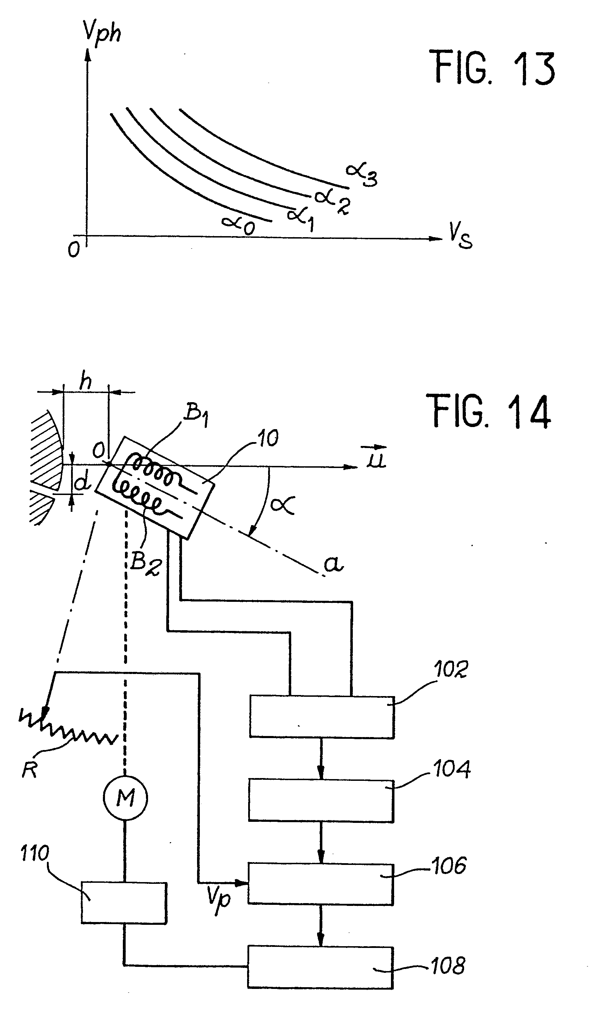

De façon comparable, on a représenté sur la figure 6, les variations du signal $V_{ph}$ délivré par le circuit de traitement de la figure 2 ou du signal $V_d$ délivré par le circuit de traitement de la figure 7 en fonction de l'angle α défini entre l'axe $\overrightarrow{Oa}$ de la sonde et la normale $\overrightarrow{Ou}$ à la surface de la pièce 18 (voir figure 12). Le déplacement correspondant de la sonde est obtenu au moyen du moteur $M_3$ sur la figure 1. Comme la courbe de la figure 5, la courbe de la figure 6 est remarquable par le fait que le signal $V_{ph}$ ou $V_d$ s'annule (pour un réglage donné du monostable 68) lorsque l'angle α atteint une valeur prédéterminée, $\alpha_0$, et par le fait que ce signal change de signe de part et d'autre de cette valeur. Cette courbe permet donc d'envisager les mêmes possibilités d'asservissement que la courbe de la figure 5.

On remarquera que la courbe de la figure 6 s'aplatit lorsque la distance h entre la sonde et la surface de la pièce augmente. Il existe donc une hauteur limite au-delà de laquelle la mesure n'est plus significative, qui correspond à la position où l'angulation de la sonde rend l'une au moins des bobines inefficace.

Dans une variante du circuit de traitement de la figure 2, le signal $V_{b2}$ injecté sur l'entrée − de l'amplificateur différentiel 46 est remplacé par un signal proportionnel et en phase avec celui de l'oscillateur 44. En pratique, cette différence se concrétise par le fait qu'une résistance R remplace la bobine $B_2$ sur la figure 2. Ce montage permet de faire une mesure différentielle de phase entre le signal $V_{b1}$ issu de la bobine $B_1$ et le signal émis par l'oscillateur 44 pris comme référence. Il permet donc d'effectuer une mesure de proximité, c'est-à-dire la mesure de la distance h entre la bobine $B_1$ et la surface métallique en regard.

Bien entendu, un montage identique peut être fait en utilisant la bobine $B_2$ à la place de la bobine $B_1$.

Comme l'illustre la figure 7, ces deux montages peuvent aussi être combinés en utilisant un multiplexeur 84 permettant de traiter alternativement les signaux $V_{b1}$ et $V_{b2}$ délivrés par les bobines $B_1$ et $B_2$. Pour ce traitement les fonctions 44, 46, 48, 50, 52, 54, 56 et 58 sont identiques à celles représentées figure 2. On obtient ainsi à la sortie du discriminateur 58 deux signaux $V_{ph1}$ et $V_{ph2}$ représentatifs des différences de phase entre les signaux $V_{b1}$ et $V_{b2}$ et le signal $V_R$ issu de l'oscillateur 44. On peut alors par des moyens de calcul 86 d'un type connu effectuer la somme et la différence des signaux $V_{ph1}$ et $V_{ph2}$, représentés respectivement par des signaux $V_s$ et $V_d$.

Comme on le verra par la suite, le circuit représenté sur la figure 7 peut être utilisé alternativement ou conjointement avec le circuit représenté sur la figure 2, selon l'asservissement que l'on désire réaliser.

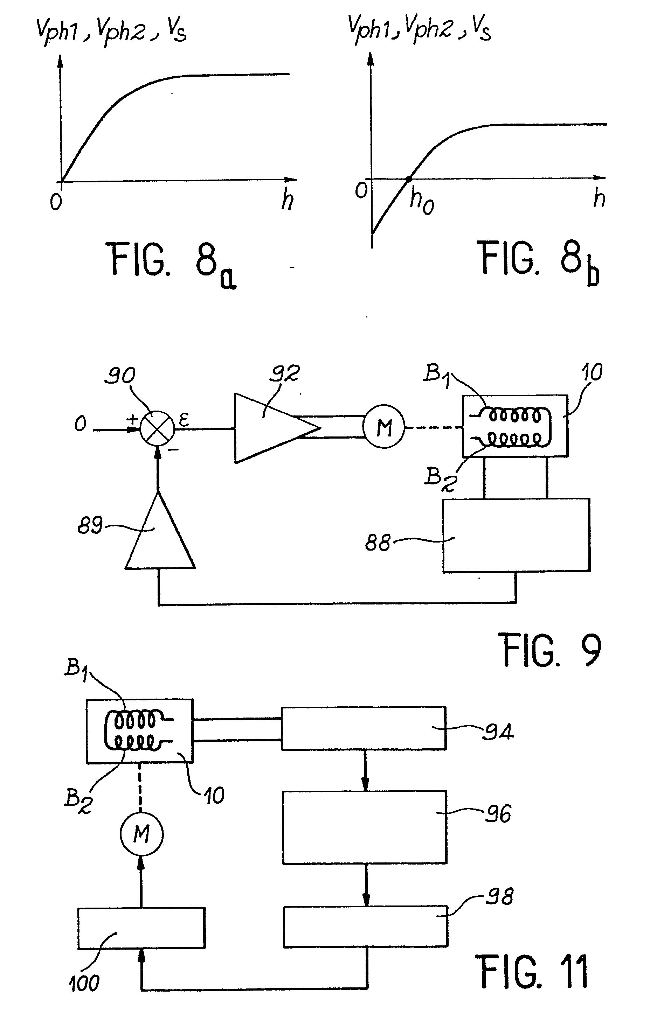

On a représenté sur les figures 8a et 8b la variation de l'un ou l'autre des signaux $V_{ph1}$ et $V_{ph2}$ ou du signal $V_s$ en fonction de la distance h séparant l'extrémité de la sonde de la surface de la pièce en vis-à-vis 14 pour deux valeurs différentes du réglage du déphaseur 56. Ainsi, sur la figure 8a, la tension de référence a été réglée de telle sorte que le signal de sortie $V_{ph1}$, $V_{ph2}$, $V_s$ soit nul lorsque la distance h est nulle. Comme on le verra par la suite, ce réglage est particulièrement adapté au cas où le positionnement de la sonde nécessite un calcul préalable de la valeur de la distance h.

Dans le cas de la figure 8b, le réglage du déphaseur 56 a été effectué de telle sorte que le signal de sortie $V_{ph1}$, $V_{ph2}$, $V_s$ s'annule pour une valeur $H_0$ de la distance h, de telle sorte que le signal $V_{ph1}$, $V_{ph2}$, $V_s$ soit négatif lorsque la distance h est inférieure à $h_0$ et positif lorsque la distance h est supérieure à $h_0$. Comme on le verra, ce réglage est particulièrement adapté au cas où l'on desire positionner directement la sonde sur la distance $h_0$, la valeur et le signe du signal $V_{ph1}$, $V_{ph2}$, $V_s$ donnant alors une indication directe de l'intensité et du sens de l'asservissement de position à réaliser, comme dans le cas des courbes des figures 5 et 6 pour le signal $V_{ph}$.

Avant de décrire la réalisation des asservissements du mécanisme 20 au moyen des deux circuits de la figure 2 et de la figure 7, on remarquera que le circuit de traitement de la figure 7 présente également certaines limites qu'il est nécessaire de respecter. En effet, comme le montrent clairement les figures 8a et 8b, il existe une limite à la distance h au-delà de laquelle les variations du signal de sortie $V_s$, $V_{ph1}$, $V_{ph2}$ deviennent pratiquement nulles. Pour une tôle donnée, cette distance est pratiquement identique à celle pour laquelle la mesure de phase n'est plus significative, c'est-à-dire à partir d'environ 15 mm dans l'exemple cité précédemment.

Conformément à un premier mode de réalisation de l'invention qui peut pratiquement être mis en œuvre à chaque fois qu'il n'est pas nécessaire de faire fonctionner les asservissements du mécanisme 20 en ayant recours aux courbes d'étalonnage du détecteur, le circuit d'asservissement de la sonde 10 permettant de positionner celle-ci en hauteur ou angulairement par rapport à une surface ou latéralement par rapport à une discontinuité de cette surface est réalisé selon le circuit représenté schématiquement sur la figure 9. Les trois mesures peuvent aussi être faites l'une après l'autre au moyen du circuit de la figure 9 qui commande alors de façon cyclique les moteurs $M_1$, $M_2$ et $M_3$ à partir des informations fournies par les circuits des figures 2 et 7.

Sur la figure 9, on voit la sonde 10 comprenant les bobines $B_1$ et $B_2$ et un moteur M qui peut être l'un quelconque des moteurs $M_1$, $M_2$ ou $M_3$. Les signaux en provenance de la sonde 10 sont injectés dans un circuit de traitement 88 constitué selon le cas par le circuit de la figure 2 ou par le circuit de la figure 7. Le signal $V_{ph}$ ou $V_s$ ou $V_d$ délivré par le circuit de traitement 88 parvient à un étage d'adaptation 89 avant d'être injecté à l'entrée − d'un soustracteur 90 dont l'entrée + est raccordée à la terre. Le soustracteur 90, qui pourrait éventuellement être remplacé par un inverseur, délivre un signal ε qui alimente un amplificateur de puissance 92 commandant le moteur M.

Dans le cas où le moteur M est constitué par le moteur $M_2$ permettant de régler le décalage latéral d de la sonde 10 par rapport à la discontinuité 18, le circuit de traitement 88 est constitué par le circuit de traitement par différence de phase représenté sur la figure 2 et délivre le signal $V_{ph}$ dont les variations en fonction de l'écart latéral d sont représentées sur la figure 5. Le monostable 68 du déphaseur logique 56 est alors réglé de façon à annuler le signal $V_{ph}$ lorsque l'axe $\overrightarrow{Oa}$ de la sonde 10 passe par le milieu de la discontinuité 18. Le circuit de la figure 9 permet alors de caler l'axe $\overrightarrow{Oa}$ de la sonde 10 sur la discontinuité 18. En effet, si le signal $V_{ph}$ délivré par le circuit de traitement est positif, le soustracteur 90 délivre un signal ε négatif dont la valeur est fonction de l'amplitude du signal $V_{ph}$ et inversement. L'étage d'adaptation 89 a pour fonction de doser les variations de $V_{ph}$ de façon compatible avec l'asservissement de position, c'est-à-dire qu'il permet de doser la valeur du signal ε qui doit être injecté dans l'amplificateur 92 afin de commander au moyen du moteur $M_2$ le déplacement latéral de la sonde 10 nécessaire et suffisant pour placer l'axe de celle-ci au milieu de la discontinuité.

Dans le cas où le moteur M est le moteur $M_3$ commandant l'orientation de la sonde par rapport à la normale à la surface en vis-à-vis, le circuit de traitement 88 peut être constitué par le circuit de traitement par différence de phases de la figure 2 qui délivre le signal de sortie $V_{ph}$ dont les variations en fonction de l'angle α d'inclinaison de l'axe de la sonde par rapport à la normale à la surface sont représentées sur la figure 6. Dans le cas du réglage du déphaseur logique 56 correspondant à la variation du signal $V_{ph}$ représentée sur la figure 6, le fonctionnement du circuit d'asservissement représenté sur la figure 9 permet d'effectuer le calage de l'axe de la sonde sur la normale à la surface.

Lorsque le moteur M est le moteur $M_3$, le circuit de traitement 88 peut aussi être constitué par le circuit de traitement par différence de phases de la figure 7, en utilisant le signal de sortie $V_d$ représentatif de la différence entre les signaux $V_{ph1}$ et $V_{ph2}$. On voit sur la figure 10 que la valeur de l'angle α d'inclinaison de l'axe de la sonde par rapport à la surface peut être calculé facilement à partir de la différence $h_2 - h_1$ et de l'entraxe e des bobines.

$$\sin \alpha = (h_2 - h_1)/e,$$

d'où :

$$\alpha = \text{Arc sin } ((h_2 - h_1)/e).$$

Les variations du signal $V_d$ en fonction de l'angle α entre l'axe du capteur et la normale à la surface métallique sont données par une courbe du type de celle de la figure 6.

Dans les cas qui viennent d'être exposés, il est bien entendu possible en modifiant le réglage du monostable 68 du déphaseur logique 56 ou en décalant la courbe de la figure 5 en lui ajoutant une tension positive ou négative d'effectuer un positionnement différent de la sonde par rapport à la discontinuité 18 et par rapport à la normale à la surface lorsque cela est nécessaire.

Enfin, lorsque le circuit d'asservissement représenté sur la figure 9 est utilisé pour mettre en œuvre le moteur $M_1$ du mécanisme 20 assurant le positionnement en hauteur de la sonde par rapport à la surface de la pièce, le circuit de traitement 88 est constitué par le circuit de traitement représenté sur la figure 7. On règle alors ce circuit en agissant sur le déphaseur 56 de façon à donner au signal de sortie $V_s$ une allure comparable à celle qui est représentée sur la figure 8b. Ainsi, il est possible grâce au circuit de la figure 9 de caler la sonde 10 en hauteur à une distance $h_0$ de la surface en vis-à-vis, le circuit de la figure 9 fonctionnant de la même manière qu'on l'a expliqué précédemment pour la mise en œuvre du moteur $M_2$.

Les trois positionnements (latéral, angulaire et en hauteur) peuvent être commandés simultanément ou l'un après l'autre au moyen du circuit de la figure 9 qui commande alors les moteurs $M_1$, $M_2$ et $M_3$ à partir des informations fournies par les circuits des figures 2 et/ou 7.

On a vu que la mesure d'angle peut être obtenue soit par mesure différentielle de phase $V_{ph}$ sur les deux bobines (figure 2), soit par mesure différentielle de proximité à partir du signal $V_d$ (figure 7). La mesure du signal $V_{ph}$ est plus sensible que celle du signal $V_d$, mais elle ne peut être utilisée pour

9

déterminer un positionnement angulaire en présence d'une discontinuité, puisque le décalage latéral par rapport à cette dernière est aussi déterminé à l'aide du signal $V_{ph}$. En effet, il ne serait pas possible de savoir si les variations du signal $V_{ph}$ sont dues à une variation de l'inclinaison de la sonde ou à une variation du décalage latéral de cette dernière par rapport à la discontinuité.

Compte tenu de cette remarque, les positionnements en hauteur h, latéral d et angulaire $\alpha$ peuvent être combinés à volonté en utilisant le circuit de la figure 2 pour obtenir le signal $V_{ph}$ et le circuit de la figure 7 pour obtenir les signaux $V_s$ et/ou $V_d$, conformément au tableau suivant :

| Positionnement sur | Traitement utilisé | | |
|---|---|---|---|
| | pour h (moteur $M_1$) | pour d (moteur $M_2$) | pour $\alpha$ (moteur $M_3$) |
| h et d | $V_s=V_{ph1}+V_{ph2}$ | $V_{ph}$ | |
| h et $\alpha$ | $V_s=V_{ph1}+V_{ph2}$ | | $V_d=V_{ph1}-V_{ph2}$ ou $V_{ph}$ |
| $\alpha$ et d | | $V_{ph}$ | $V_d=V_{ph1}-V_{ph2}$ |
| $\alpha$ et d et h | $V_s=V_{ph1}+V_{ph2}$ | $V_{ph}$ | $V_d=V_{ph1}-V_{ph2}$ |

Conformément à une deuxième variante de réalisation de l'invention, utilisable notamment lorsque les asservissements du mécanisme 20 doivent fonctionner en numérique, le circuit d'asservissement est réalisé conformément à la représentation schématique de la figure 11. Ainsi, les signaux délivrés par les bobines $B_1$ et $B_2$ de la sonde 10 alimentent un circuit de traitement 94 qui peut être l'un et/ou l'autre des circuits de traitement que l'on a décrits précédemment en se référant aux figures 2 et 7. Le circuit de traitement 94 délivre au moins un signal $V_{ph}$ et/ou $V_s$ et/ou $V_d$ qui est transmis à une mémoire 96 dans laquelle on a mémorisé au préalable l'une des courbes représentées sur les figures 5, 6 et 8a, ou une famille de courbes dérivées de la combinaison de deux de ces courbes (figures 12 et 13). L'injection dans la mémoire 96 du ou des signaux émis par le circuit de traitement 94, ces signaux étant représentatifs de la position instantanée de la sonde, permet par comparaison avec les courbes mémorisées de déterminer au moyen d'un organe de calcul 98 la valeur et le signe de la correction qui doit être effectuée au moyen d'une commande d'asservissement 100 agissant sur le moteur M (qui peut être l'un quelconque des moteurs $M_1$, $M_2$ ou $M_3$) pour réaliser le positionnement souhaité.

Lorsque le moteur M est constitué par le moteur $M_2$ permettant de régler le décalage latéral d de la sonde par rapport à la discontinuité 18, on enregistre au préalable dans la mémoire 96, le réseau de courbes de la figure 12 représentant les variations du signal $V_{ph}$ en fonction de ce décalage d pour différentes valeurs de l'angle d'inclinaison $\alpha$, dans les mêmes conditions que celles qui vont donner lieu à la mesure. Le circuit de traitement 94 est alors constitué par le circuit de traitement de la figure 2 et par le circuit de traitement de la figure 7, qui délivrent des signaux $V_{ph}$ et $V_d = V_{ph1}-V_{ph2}$ représentatifs de la position instantanée de la sonde. La comparaison de ces signaux instantanés avec le réseau de courbes mémorisé permet, au moyen de l'organe de calcul 98, de déterminer la correction à effectuer au moyen de la commande d'asservissement 100 sur le moteur $M_2$.

Dans le cas où le moteur M du circuit de la figure 11 est constitué par le moteur $M_1$ permettant de commander le positionnement en hauteur h de la sonde 10, la courbe enregistrée dans la mémoire 96 est celle de la figure 8a et le circuit de traitement 94 est constitué par le circuit de traitement de la figure 7 qui délivre un signal de sortie $V_s$. Comme dans le cas précédent, le signal $V_s$ délivré par le circuit de traitement 94 est représentatif de la position instantanée de la sonde 10. La comparaison de ce signal $V_s$ avec la courbe de variation de $V_s$ par rapport à la hauteur h enregistrée au préalable dans la mémoire 96 permet donc de déterminer au moyen de l'organe de calcul 98 la correction qui doit être effectuée par la commande d'asservissement 100 sur le moteur $M_1$ afin que la sonde 10 se cale sur la valeur souhaitée de la hauteur h.

Enfin, dans le cas où le circuit de la figure 11 commande le moteur $M_3$ assurant le positionnement angulaire de la sonde par rapport à la normale à la surface de la pièce 14, il est nécessaire de tenir compte du fait que les variations du signal $V_{ph}$ délivré par le circuit de traitement de la figure 2 par rapport à l'angle $\alpha$ dépendent de la distance h en même temps que des conditions de mesure telles que la nature du métal, la fréquence de travail, etc... Pour cette raison, le circuit de traitement 94 comprend à la fois le circuit de traitement par différence de phase de la figure 2 et le circuit de traitement de la figure 7. Pour la même raison, la courbe enregistrée dans la mémoire 96 est constituée par une combinaison de la courbe de la figure 6 représentant les variations du signal $V_{ph}$ en fonction de l'angle $\alpha$ avec la courbe de la figure

10

8a représentant les variations du signal $V_s$ en fonction de la hauteur h. Plus précisément, on a enregistré au préalable dans la mémoire 96 une famille de courbes représentant les variations du signal $V_{ph}$ en fonction du signal $V_s$ pour différentes valeurs de l'angle $\alpha$. L'allure de cette famille de courbes apparaît sur la figure 13.

Toujours dans le cas où le circuit de la figure 11 commande le moteur $M_3$, le circuit de traitement 94 peut aussi être constitué uniquement par le circuit de traitement de la figure 7. En effet, on a vu a propos du circuit d'asservissement de la figure 9 que les variations du signal $V_d = V_{ph1} - V_{ph2}$ en fonction des distances $h_1$ et $h_2$ permettent, à partir de la courbe de la figure 6, de déterminer l'angle d'inclinaison $\alpha$ à l'aide de la formule :

$$\alpha = \text{Arc sin } ((h_2 - h_1)/e).$$

La courbe enregistrée dans la mémoire 96 est alors constituée par la courbe représentant les variations du signal $V_d$ en fonction de l'angle $\alpha$ et de la distance h.

Le circuit de la figure 11 fonctionne de la même manière que dans les cas précédents lorsqu'il assure la commande du moteur $M_3$. Ainsi les circuits de traitement de la figure 2 et de la figure 7, ou ce dernier circuit seul, délivrent les signaux de sortie $V_{ph}$ et $V_s$, ou $V_d$, respectivement, représentatifs de la position instantanée de la sonde 10. Les signaux $V_{ph}$ et $V_s$, ou $V_d$, sont comparés à la famille de courbes ou à la courbe enregistrée dans la mémoire 96 et permettent de déterminer au moyen de l'organe de calcul 98 la correction qu'il est nécessaire d'effectuer sur le moteur $M_3$ au moyen de la commande d'asservissement 100 pour caler la sonde sur l'orientation angulaire $\alpha$ souhaitée.

Dans les trois cas qui viennent d'être exposés, l'entrée en mémoire des courbes des figures 5, 8a et 13 respectivement est effectuée au moyen d'un circuit d'apprentissage (non représenté) qui comprend le ou les mêmes circuits de traitement que le circuit de la figure 11 injectant les signaux $V_{ph}$ et/ou $V_s$ et/ou $V_d$ dans la mémoire, ainsi qu'une commande de mémorisation sensible à des signaux délivrés par des capteurs potentiométriques associés à la ou aux parties correspondantes du mécanisme 20 de la figure 1, afin de donner l'indication directe des mouvements du capteur dans les trois mouvements concernés. Ainsi, lorsque le moteur M est constitué par le moteur $M_2$ commandant le déplacement transversal de la sonde 10 par rapport à la discontinuité 18, le capteur potentiométrique agissant sur la commande de mémorisation peut être, par exemple, solidaire du secteur denté 36. Lorsque le moteur M est constitué par le moteur $M_1$, le capteur potentiométrique peut être disposé entre le bras fixe 22 et la colonne 28. Enfin, lorsque le circuit de la figure 11 est destiné à commander le moteur $M_3$, la mémorisation de la courbe de la figure 13 nécessite l'utilisation de deux capteurs potentiométriques, l'un étant disposé entre le secteur denté 40 et la plaque 36 afin de détecter les variations de l'angle d'inclinaison $\alpha$ du capteur, alors que l'autre est disposé entre la plaque support 22 et la colonne 28 afin de détecter les variations de la hauteur h. Grâce à ces circuits d'apprentissage, les courbes des figures 5, 8a et 13 sont enregistrées dans la mémoire 96 en déplaçant régulièrement la sonde 10 latéralement, en hauteur, ou à la fois angulairement et en hauteur selon le moteur M que l'on désire commander au moyen du circuit de la figure 11.

Bien entendu, comme dans la première variante de réalisation correspondant au circuit d'asservissement de la figure 9, les positionnements en hauteur h, latéral d et angulaire $\alpha$ peuvent être combinés dans la variante de réalisation qui vient d'être décrite en se référant au circuit d'asservissement de la figure 11. Le tableau donnant les différentes combinaisons possibles des circuits de traitement des figures 2 et 7 à propos de la première variante de réalisation s'applique à cette seconde variante et ne sera donc pas repris ici.

On a représenté sur la figure 14 une troisième variante d'un circuit d'asservissement selon l'invention.

On retrouve sur la figure 14 la sonde 10 et ses deux bobines $B_1$ et $B_2$. La sonde 10 délivre des signaux qui sont injectés dans un circuit de traitement 102 constitué par le circuit de traitement de la figure 2 ou de la figure 7 qui délivre le signal $V_{ph}$ ou $V_s$ et/ou $V_d$. Ce signal parvient à une commande de mémorisation 104 agissant sur une mémoire 106. D'autre part, le moteur M commandant le mouvement de la sonde 10 est associé à un capteur de position R qui peut être disposé comme on l'a vu sur la figure 1.

Si le moteur M est le moteur $M_1$, le capteur de position associé à son mouvement peut être disposé, comme on l'a vu entre le bras 22 et la colonne verticale 28 sur la figure 1. Le signal $V_p$ délivré par ce capteur est directement proportionnel au déplacement h entre la sonde et la surface de la pièce 14. Ce signal $V_p$ est acheminé jusqu'à la mémoire 106 reliée à un organe de calcul 108 permettant d'agir par une commande d'asservissement 110 sur le moteur $M_1$, pour corriger la position h de la sonde 10 afin de caler celle-ci sur la distance h souhaitée.

Si le moteur M est le moteur $M_3$, le capteur de position associé à son mouvement peut être disposé, comme on l'a vu entre le secteur denté 40 et la plaque 36 sur la figure 1. Le signal $V_p$ délivré par ce capteur est directement proportionnel à l'angle $\alpha$ défini entre l'axe $\overrightarrow{Oa}$ de la sonde et la normale $\overrightarrow{Ou}$ à la surface de la pièce 14. Ce signal $V_p$ est acheminé jusqu'à la mémoire 106 reliée à un organe de calcul 108 permettant d'agir par une commande d'asservissement 110 sur le moteur $M_3$, pour corriger l'inclinaison de la sonde 10 afin de caler celle-ci sur l'inclinaison souhaitée.

Si le moteur M est le moteur $M_2$, le capteur de position associé à son mouvement peut être disposé,

11

comme on l'a vu, entre le secteur denté 34 et la plaque 32 sur la figure 1. Le signal $V_p$ délivré par ce capteur est directement proportionnel à la distance d entre la sonde et la discontinuité 18 sur la surface de la pièce 14. Ce signal $V_p$ est acheminé jusqu'à la mémoire 106 reliée à un organe de calcul 108 permettant d'agir par une commande d'asservissement 110 sur le moteur $M_2$, pour corriger la position de la sonde 10 afin de caler celle-ci sur la distance d souhaitée.

La mise en œuvre de ce circuit s'effectue en deux temps. Dans un premier temps (repérage de référence), on mobilise la sonde selon le mouvement désiré, en agissant sur le moteur M, de façon à détecter au moyen du circuit de traitement 102 le passage par une valeur prédéterminée de la caractéristique $V_{ph} = f(\alpha)$ représentée sur la figure 6, $V_{ph} = f(\alpha)$ représentée sur la figure 5 ou $V_s = f(h_1 + h_2)$ et $V_d = f\alpha$ représentées sur la figure 6 selon le mouvement considéré. Cette valeur prédéterminée est obtenue à partir des circuits de la première ou de la deuxième variante de réalisation. Le signal $V_{p0}$ correspondant délivré par le capteur de position R est alors enregistré dans la mémoire 106. Au cours de la deuxième étape du fonctionnement du circuit de la figure 14 qui correspond au fonctionnement normal de ce circuit permettant d'asservir en position la sonde 10 en agissant sur le moteur M, c'est la tension mémorisée $V_{p0}$ qui sert de référence pour mesurer l'angle $\alpha$, le décalage d ou la distance h à partir de la valeur instantanée du signal $V_p$ donnée par le capteur de position R. La comparaison du signal $V_p$ avec le signal mémorisé $V_{p0}$ permet en effet de déterminer au moyen de l'organe de calcul 108 la correction qu'il est nécessaire d'effectuer en agissant sur le moteur M au moyen de la commande d'asservissement 110.

Bien entendu, si l'on se réfère à nouveau à la figure 1, on comprendra à la lecture de ce qui précède que le détecteur 10 peut comprendre une ou plusieurs sondes à courants de Foucault selon le nombre et la nature des fonctions de positionnement que l'on souhaite réaliser. Ainsi, si l'une seulement des trois fonctions de positionnement doit être remplie dans les dispositifs de fonctionnement à réaliser, le détecteur est constitué par une seule sonde à courants de Foucault comme le montre la figure 1. Cette sonde est reliée au circuit de traitement de la figure 2 ou à celui de la figure 7, ou à ces deux circuits, selon le positionnement à réaliser et selon le circuit d'asservissement utilisé.

Le détecteur 10 peut aussi être constitué par une seule sonde comme l'illustre la figure 1 lorsqu'on souhaite réaliser à la fois un positionnement latéral par rapport à une discontinuité, un positionnement en hauteur par rapport à une discontinuité, un positionnement en hauteur par rapport au plan des tôles et un positionnement angulaire autour d'un axe horizontal transversal par rapport à la discontinuité. Si l'on désire effectuer en plus un positionnement angulaire autour d'un axe perpendiculaire au premier, afin de permettre une orientation angulaire dans toutes les directions, il est nécessaire d'utiliser une seconde sonde à courants de Foucault dont les bobines sont disposées dans un plan perpendiculaire à celui des bobines $B_1$ et $B_2$ de la première sonde représentée sur la figure 1.

La ou les sondes constituant le détecteur 10 comprennent toujours deux bobines $B_1$ et $B_2$ dont les axes sont symétriques par rapport à un axe définissant l'axe de la sonde, ce dernier étant soit confondu avec la normale en un point à la surface en vis-à-vis soit, de façon plus générale, dispose dans un plan normal à la surface et tangent à la discontinuité au point considéré.

Grâce au dispositif de positionnement qui vient d'être décrit à titre d'exemple, il est donc possible d'effectuer séparément ou en toute combinaison opérante le positionnement d'un détecteur et d'un organe à positionner qui lui est associé en hauteur ou angulairement par rapport à une surface d'une pièce en vis-à-vis, ou transversalement par rapport à une discontinuité formée sur cette surface. De plus, le traitement des signaux par différence de phases permet d'utiliser ce dispositif même en présence de parasites (notamment à proximité d'une tête de soudage), ce qui serait pratiquement impossible si l'on effectuait un traitement d'amplitude. En outre, la sensibilité de la mesure est meilleure.

## Revendications

1. Procédé de positionnement d'un organe par rapport à une surface métallique (16) au moyen d'un détecteur (10) à courants de Foucault, selon l'une au moins des trois grandeurs géométriques que sont la distance (h) à cette surface, l'angle d'inclinaison ($\alpha$) par rapport à la normale $(\overrightarrow{Ou})$ à cette surface et le décalage latéral (d) par rapport à une discontinuité (18) formée sur cette surface, le détecteur comprenant au moins une sonde à courants de Foucault comportant deux bobines ($B_1$, $B_2$) et incorporées dans un pont de mesure ($R_1$, $R_2$) alimenté par un premier signal, selon lequel on dispose les bobines symétriquement par rapport à un axe $(\overrightarrow{Oa})$ contenu dans un plan normal à la surface (16) et passant par la discontinuité (18) et on engendre au moins un signal continu ($V_{ph}$, $V_s$, $V_d$) fonction de la différence de phase entre le premier signal et le signal ($V_b$) aux bornes des bobines, ce signal continu variant avec l'une desdites grandeurs géométriques en s'annulant pour une valeur donnée de cette grandeur et on commande le déplacement dudit organe en fonction de la valeur du ou des signaux continus de façon à donner à la grandeur géométrique (h, $\alpha$, d) sur laquelle on veut se positionner, la valeur souhaitée ($h_0$, $\alpha_0$, $d_0$), caractérisé en ce que l'on engendre ledit signal continu ($V_{ph}$, $V_s$, $V_d$) en ajoutant au signal ($V_b$) aux bornes des bobines un signal ($V_0$) déphasé de $\varphi$ par rapport au premier signal, puis en comparant en phase le signal ($V_c$) ainsi obtenu au premier signal dans un discriminateur de phases (58) conçu de telle manière que, lorsque ses entrées sont déphasées de $\varphi$, sa sortie est nulle.

2. Procédé selon la revendication 1, caractérisé en ce que ledit premier signal est un signal sinusoïdal dont la fréquence est 240 kHz.

3. Procédé selon l'une quelconque des revendications 1 et 2, caractérisé en ce que le signal continu $(V_{ph}, V_s, V_d)$ s'annule et change de signe lorsque la grandeur géométrique correspondante $(h, \alpha, d)$ atteint ladite valeur donnée $(h_0, \alpha_0, d_0)$ qui correspond à la valeur de cette grandeur sur laquelle on souhaite positionner ledit organe, et en ce que la distance et le sens du déplacement dudit organe sont déterminés par l'intensité et le signe du signal continu.

4. Procédé selon l'une quelconque des revendications 1 et 2, caractérisé en ce que l'on mémorise la courbe de variation du ou des signaux continus $(V_{ph}, V_s, V_d)$ en fonction de la grandeur $(h, \alpha, d)$ correspondante, ou une courbe dérivée, et en ce que l'on mesure la valeur instantanée de la grandeur géométrique sur laquelle on désire se positionner en déterminant la valeur correspondante du ou des signaux continus et en reportant cette valeur sur la courbe de variation mémorisée.

5. Procédé selon la revendication 4, caractérisé en ce que l'on commande le déplacement dudit organe en fonction de la différence entre cette valeur mesurée et une valeur de consigne.

6. Procédé selon la revendication 1, caractérisé en ce que le signal continu $(V_{ph}, V_s, V_d)$ s'annule ou prend une valeur déterminée lorsque la grandeur géométrique correspondante $(h, \alpha, d)$ atteint ladite valeur donnée, en ce qu'on mémorise la valeur $(V_{p0})$ d'un troisième signal $(V_p)$ représentatif de la position de la sonde (10) en fonction de la grandeur que l'on souhaite régler, pour laquelle le signal continu $(V_{ph}, V_s, V_d)$ s'annule ou prend ladite valeur déterminée et en ce qu'on mesure cette grandeur géométrique en comparant la valeur réelle du troisième signal $(V_p)$ à la valeur mémorisée $(V_{p0})$ avant de commander le déplacement dudit organe en fonction de cette valeur mesurée.

7. Procédé selon la revendication 3, appliqué au positionnement dudit organe par rapport à une discontinuité (18) formant une ligne sur ladite surface (16), caractérisé en ce que le signal continu est un signal $(V_{ph})$ représentatif de la différence de phase entre le premier signal alimentant le pont de mesure et le signal $(V_b)$ aux bornes des bobines $(B_1, B_2)$ de la sonde, le déplacement dudit organe s'effectuant selon une direction transversale par rapport à la discontinuité et le signal continu s'annulant lorsque l'axe $(\overrightarrow{Oa})$ de la sonde est à une distance prédéterminée $(d_0)$ du centre de la discontinuité.

8. Procédé selon la revendication 3, appliqué au positionnement dudit organe par rapport à la normale $(\overrightarrow{Ou})$ en un point donné à la surface (16) caractérisé en ce que le signal continu est un signal $(V_{ph})$ représentatif de la différence de phase entre le premier signal alimentant le pont de mesure et le signal $(V_b)$ aux bornes des bobines $(B_1, B_2)$ de la sonde, le déplacement dudit organe étant un pivotement autour d'un axe (42) contenu dans le plan perpendiculaire au plan des bobines ou à leur plan de symétrie, et perpendiculaire à l'axe $(\overrightarrow{Oa})$ de la sonde, le signal continu s'annulant lorsque l'axe de la sonde forme un angle prédéterminé $(\alpha_0)$ avec la normale à la surface.

9. Procédé selon la revendication 3, appliqué au positionnement dudit organe par rapport a la normale $(\overrightarrow{Ou})$ en un point donné à la surface (16), caractérisé en ce que le signal continu est un signal $(V_d)$ correspondant à la différence entre deux signaux intermédiaires $(V_{ph1}, V_{ph2})$, ces derniers étant représentatifs des différences de phases entre chacun des signaux $(V_{b1}, V_{b2})$ aux bornes des bobines $(B_1, B_2)$ et le premier signal alimentant le pont de mesure et en ce que le déplacement dudit organe est un pivotement autour d'un axe (42) contenu dans le plan perpendiculaire au plan des bobines $(B_1, B_2)$ ou à leur plan de symétrie et perpendiculaire à l'axe $(\overrightarrow{Oa})$ de la sonde, le signal continu s'annulant lorsque l'axe de la sonde forme un angle prédéterminé $(\alpha_0)$ avec la normale à la surface.

10. Procédé selon la revendication 3, appliqué au positionnement dudit organe à une distance $(h_0)$ donnée de la surface (16), caractérisé en ce que le signal continu est un signal correspondant à la somme $(V_d)$ de deux signaux intermédiaires $(V_{ph1}, V_{ph2})$, ces derniers étant représentatifs des différences de phases entre chacun des signaux $(V_{b1}, V_{b2})$ aux bornes des bobines et le premier signal alimentant le pont de mesure, le déplacement dudit organe s'effectuant selon une direction longitudinale par rapport à son axe, le signal continu s'annulant lorsque le détecteur (10) se trouve à ladite distance $(h_0)$ donnée de la surface.

11. Procédé selon l'une quelconque des revendications 4 ou 5, appliqué au positionnement latéral (d) dudit organe par rapport à une discontinuité (18) formée sur ladite surface (16) caractérisé en ce que le signal continu comprend un signal $(V_{ph})$ représentatif de la différence de phase entre le premier signal alimentant le pont de mesure et le signal $(V_b)$ aux bornes des bobines $(B_1, B_2)$ de la sonde et un signal $(V_d)$ correspondant à la différence entre deux signaux intermédiaires $(V_{ph1}, V_{ph2})$, ces derniers étant représentatifs des différences de phases entre chacun des signaux $(V_{b1}, V_{b2})$ aux bornes des bobines et le premier signal alimentant le pont de mesure.

12. Procédé selon l'une quelconque des revendications 4 ou 5, appliqué au positionnement angulaire $(\alpha)$ dudit organe par rapport à la normale $(\overrightarrow{Ou})$ à la surface (16), caractérisé en ce que le signal continu comprend un signal $(V_{ph})$ représentatif de la différence de phase entre le premier signal alimentant le pont de mesure et le signal $(V_b)$ aux bornes des bobines $(B_1, B_2)$ de la sonde, qui varie avec l'angle d'inclinaison $(\alpha)$, et un signal $(V_s)$ correspondant à la somme de deux signaux intermédiaires, ces derniers étant représentatifs des différences de phases entre chacun des signaux $(V_{b1}, V_{b2})$ aux bornes des bobines de la sonde et le premier signal alimentant le pont de mesure, ce signal $(V_s)$ variant avec la distance (h) séparant ledit organe de la surface, et en ce qu'on mémorise la courbe de variation du signal représentatif de la différence de phase en fonction du signal représentatif de la somme des signaux pour différentes valeurs de l'angle (α).

13. Procédé selon l'une quelconque des revendications 3 ou 4, appliqué au positionnement angulaire (α) dudit organe par rapport à la normale ($\overrightarrow{Ou}$) à la surface (16), caractérisé en ce que le signal continu est un signal ($V_{ph}$) représentatif de la différence de phase entre le premier signal ($V_d$) correspondant à la différence entre deux signaux intermédiaires ($V_{ph1}$, $V_{ph2}$), ces derniers étant représentatifs des différences de phases entre chacun des signaux ($V_{b1}$, $V_{b2}$) aux bornes des bobines et le premier signal alimentant le pont de mesure.

14. Procédé selon la revendication 6, appliqué au positionnement angulaire (α) dudit organe par rapport à la normale ($\overrightarrow{Ou}$) en un point donné à la surface (16), caractérisé en ce que le signal continu est un signal ($V_{ph}$) représentatif de la différence de phase entre le premier signal alimentant le pont de mesure et le signal ($V_b$) aux bornes des bobines de la sonde, qui varie avec l'angle d'inclinaison (α), en ce qu'on mémorise un signal ($V_p$) représentatif de la position de la sonde correspondant à un angle ($α_0$) connu que fait son axe avec la normale à la surface, pour laquelle le signal continu a une valeur donnée, et en ce qu'on mesure l'angle d'inclinaison (α) en comparant le signal représentatif de la position de la sonde à la valeur mémorisée ($V_p$) de ce signal.

15. Procédé selon la revendication 6, appliqué au positionnement angulaire (α) dudit organe par rapport à la normale ($\overrightarrow{Ou}$) en un point donné à la surface (16), caractérisé en ce que le signal continu est un signal ($V_d$) correspondant à la différence entre deux signaux intermédiaires ($V_{ph1}$, $V_{ph2}$), ces derniers étant représentatifs des différences de phases entre chacun des signaux ($V_{b1}$, $V_{b2}$) aux bornes des bobines et le premier signal alimentant le pont de mesure, ce signal ($V_d$) variant avec l'angle d'inclinaison (α), en ce qu'on mémorise un signal ($V_p$) représentatif de la position de la sonde correspondant à un angle ($α_0$) que fait son axe avec la normale à la surface, pour laquelle le signal continu a une valeur donnée, et en ce qu'on mesure l'angle d'inclinaison (α) en comparant le signal représentatif de la position de la sonde à la valeur mémorisée de ce signal.

16. Procédé selon la revendication 6, appliqué au positionnement dudit organe par rapport à une discontinuité (18) formant une ligne sur la surface (16), caractérisé en ce que le signal continu est un signal ($V_{ph}$) représentatif de la différence de phase entre le premier signal alimentant le pont de mesure et le signal ($V_b$) aux bornes des bobines de la sonde, qui varie avec l'écart latéral (d) dudit organe par rapport à la discontinuité, en ce qu'on mémorise un signal représentatif de la position de la sonde correspondant à un écart ($d_0$) connu de l'axe de la sonde par rapport au milieu de la discontinuité pour laquelle le signal continu a une valeur donnée, et en ce qu'on mesure l'écart (d) en comparant le signal représentatif de la position de la sonde à la valeur mémorisée de ce signal.

17. Procédé selon la revendication 6, appliqué au positionnement dudit organe à une distance (h) donnée de la surface (16), caractérisé en ce que le signal continu est un signal ($V_s$) correspondant à la somme de deux signaux intermédiaires, ces derniers étant représentatifs des différences de phases entre chacun des signaux ($V_{b1}$, $V_{b2}$) aux bornes des bobines de la sonde et le premier signal alimentant le pont de mesure, ce signal ($V_s$) variant avec la distance (h), en ce qu'on mémorise le signal représentatif de la position de la sonde correspondant à une distance ($h_0$) connue séparant ledit organe de la surface, pour laquelle le signal continu a une valeur donnée, et en ce qu'on mesure la distance (h) en comparant le signal représentatif de la position de la sonde à la valeur mémorisée de ce signal.

18. Procédé selon l'une quelconque des revendications 4 ou 5, appliqué au réglage de la distance (h) séparant ledit organe de la surface (16), caractérisé en ce que le signal continu est un signal ($V_s$) correspondant à la somme de deux signaux intermédiaires, ces derniers étant représentatifs des différences de phases entre chacun des signaux ($V_{b1}$, $V_{b2}$) aux bornes des bobines et le premier signal alimentant le pont de mesure.

19. Procédé selon l'une quelconque des revendications 1 à 18, caractérisé en ce que l'on donne au déphasage φ une valeur de π/2.

20. Dispositif de positionnement d'un organe par rapport à une surface (14) au moyen d'un détecteur à courants de Foucault (10), notamment selon l'une au moins des trois grandeurs géométriques que sont la distance (h) à cette surface, l'angle d'inclinaison (α) par rapport à la normale à cette surface et le décalage latéral (d) par rapport à une discontinuité formée sur cette surface, le détecteur (10) comprenant au moins une sonde à courants de Foucault comportant deux bobines ($B_1$, $B_2$) incorporées dans un pont de mesure alimenté par un premier signal, les bobines ($B_1$, $B_2$) étant disposées symétriquement par rapport à un axe contenu dans un plan normal à la surface et passant par la discontinuité, le dispositif comprenant des moyens de traitement (88, 94, 102) délivrant un signal continu ($V_{ph}$, $V_s$, $V_d$) fonction de la différence de phase entre le premier signal et le signal ($V_b$) aux bornes des bobines, ce signal continu variant avec l'une desdites grandeurs géométriques (h, α, d) en s'annulant pour une valeur donnée de cette grandeur, et des moyens (92, M-100, M-110, $M_3$) pour commander le déplacement dudit organe en fonction de la valeur du second signal ($V_{ph}$, $V_s$, $V_d$), caractérisé en ce que les moyens de traitement comprennent des moyens (48) pour ajouter au signal ($V_b$) aux bornes des bobines un signal ($V_0$) correspondant au signal injecté dans le pont, déphasé de φ, et un discriminateur de phases (58) sensible au signal ($V_c$) ainsi obtenu et au signal injecté dans le pont de mesure pour délivrer un signal de sortie ($V_{ph}$, $V_s$, $V_d$) qui s'annule lorsque ses entrées sont déphasées de φ.

21. Dispositif selon la revendication 20, caractérisé en ce qu'il comprend des moyens (44) pour délivrer le premier signal sous la forme d'un signal sinusoïdal dont la fréquence est 240 kHz.

22. Dispositif selon l'une quelconque des revendications 20 et 21, caractérisé en ce que les moyens de traitement (88) délivrent un ou des signaux continus ($V_{ph}$, $V_s$, $V_d$), qui varient avec la grandeur géométrique correspondante (h, $\alpha$, d) en changeant de signe lorsque cette grandeur atteint la valeur ($h_0$, $\alpha_0$, $d_0$) sur laquelle on souhaite positionner ledit organe et en ce que les moyens de commande (92, M) déplacent le détecteur sur une distance et dans un sens déterminés par l'intensité et le signe du signal continu ($V_{ph}$, $V_s$, $V_d$).

23. Dispositif selon l'une quelconque des revendications 20 et 21, caractérisé en ce que les moyens de traitement (94) délivrent un ou des signaux continus ($V_{ph}$, $V_s$, $V_d$), qui varient avec la grandeur géométrique correspondante (h, $\alpha$, d) en s'annulant lorsque cette grandeur atteint une valeur prédéterminée, des moyens (96) étant prévus pour mémoriser la courbe de variation de ce ou de ces seconds signaux ($V_{ph}$, $V_s$, $V_d$) en fonction de la grandeur géométrique (h, $\alpha$, d) que l'on désire régler et des moyens (98) étant prévus pour calculer la correction à effectuer à l'aide des moyens de commande (100, M) par comparaison de la valeur instantanée du ou des signaux continus ($V_{ph}$, $V_s$, $V_d$) déterminés par les moyens de traitement (94) avec la courbe de variation mémorisée.

24. Dispositif selon l'une quelconque des revendications 20 et 21, caractérisé en ce que les moyens de traitement (102) délivrent un signal continu ($V_{ph}$, $V_s$, $V_d$) qui varie avec l'une des grandeurs géométriques (h, $\alpha$, d) en s'annulant lorsque cette grandeur s'annule, des moyens (R) étant prévus pour délivrer un troisième signal ($V_p$) représentatif de la position de la sonde (10) par rapport à la grandeur géométrique (h, $\alpha$, d) que l'on désire régler, des moyens (104, 106) étant prévus pour mémoriser la valeur ($V_{p0}$) de ce troisième signal pour laquelle le signal continu ($V_{ph}$, $V_s$, $V_d$) s'annule, et des moyens (108) étant prévus pour calculer la correction à effectuer à l'aide des moyens de commande (110, $M_3$) par comparaison de la valeur instantanée du troisième signal ($V_p$) avec la valeur mémorisée ($V_{p0}$).

25. Dispositif selon l'une quelconque des revendications 20 à 24, caractérisé en ce que des moyens (56) sont prévus pour déphaser le signal injecté dans le pont de mesure avant qu'il ne parvienne dans le discriminateur de phases (58), afin de régler la valeur de la grandeur à mesurer ($\alpha$, d) pour laquelle le signal de sortie ($V_{ph}$) s'annule.

26. Dispositif selon l'une quelconque des revendications 20 à 25, appliqué au positionnement latéral (d) dudit organe par rapport à une discontinuité (18) formant une ligne sur ladite surface (14), caractérisé en ce que les moyens (92, M-100, M-110, M) pour commander le déplacement dudit organe comprennent des moyens ($M_2$, 34, 36) pour déplacer ledit organe selon une direction transversale par rapport à ladite ligne, le signal de sortie ($V_{ph}$) du discriminateur de phases (58) s'annulant lorsque l'axe ($\overrightarrow{Oa}$) de la sonde passe par le centre de la discontinuité.

27. Dispositif selon l'une quelconque des revendications 20 à 25, appliqué au positionnement angulaire ($\alpha$) dudit organe par rapport à la normale ($\overrightarrow{Ou}$) à la surface, caractérisé en ce que les moyens (92, M-100, M-110, M) pour commander le déplacement dudit organe comprennent des moyens ($M_3$, 38, 40) pour faire pivoter ledit organe autour d'un axe (42) perpendiculaire à l'axe de la sonde, le signal de sortie ($V_{ph}$) du discrimateur de phases (58) s'annulant lorsque l'axe ($\overrightarrow{Oa}$) de la sonde est confondu avec la normale ($\overrightarrow{Ou}$) à la surface.

28. Dispositif selon l'une quelconque des revendications 20 à 24, caractérisé en ce que les moyens de traitement (88, 94, 102) comprennent des moyens (46) délivrant alternativement un signal représentatif de l'un ou l'autre des signaux ($V_{b1}$, $V_{b2}$) aux bornes des bobines ($B_1$, $B_2$) de la sonde (10) et d'un signal proportionnel et en phase avec le signal injecté dans le pont, des moyens (48) pour ajouter à ce signal un signal correspondant au signal injecté dans le pont déphasé de $\pi/2$, des moyens (52, 54) pour transformer la somme ($V_c$) ainsi obtenue ainsi que le signal injecté dans le pont en signaux logiques, et un discriminateur de phases (58) sensible aux signaux logiques représentatifs de la somme ($V_c$) et du signal injecté dans le pont de mesure pour délivrer deux signaux de sortie ($V_{ph1}$, $V_{ph2}$) qui s'annulent lorsque la grandeur à mesurer (h, $\alpha$) atteint ladite valeur donnée.

29. Dispositif selon la revendication 28, caractérisé en ce que des moyens (56) sont prévus pour déphaser le signal logique représentatif du signal injecté dans le pont de mesure avant qu'il ne parvienne dans le discriminateur de phases (58), afin de régler la valeur de la grandeur à mesurer (h, $\alpha$) pour laquelle le signal de sortie ($V_{ph1}$, $V_{ph2}$) s'annule.

30. Dispositif selon l'une quelconque des revendications 28 et 29, caractérisé en ce que des moyens (86) sont prévus pour calculer la somme ($V_s$) et la différence ($V_d$) des signaux de sortie ($V_{ph1}$, $V_{ph2}$).

31. Dispositif selon l'une quelconque des revendications 28 à 30, appliqué au positionnement dudit organe à une distance ($h_0$) donnée de la surface, caractérisé en ce que les moyens (92, M-100, M-110, M) pour commander le déplacement dudit organe comprennent des moyens ($M_1$, 24, 26) pour déplacer ledit organe selon une direction verticale, le signal de sortie ($V_s$) variant avec la distance entre le détecteur et la surface.

32. Dispositif selon l'une quelconque des revendications 28 à 30, appliqué au positionnement angulaire ($\alpha$) dudit organe par rapport à la normale ($\overrightarrow{Ou}$) à la surface, caractérisé en ce que les moyens (92, M-100, M-110, M) pour commander le déplacement dudit organe comprennent des moyens ($M_3$, 34, 36) pour faire pivoter ledit organe autour de la normale ($\overrightarrow{Ou}$) à la surface, le signal de sortie ($V_d$) variant avec l'angle ($\alpha$) entre l'axe ($\overrightarrow{Oa}$) du détecteur et la normale ($\overrightarrow{Ou}$).

33. Dispositif selon l'une quelconque des revendications 20 à 32, caractérisé en ce que le déphasage $\varphi$ a une valeur de $\pi/2$.

## Claims

1. Process for positioning an element with respect to a metallic surface (16) by means of a Foucault current detector (10) according to at least one of three geometric quantities, viz. the distance (h) to said surface, the angle of inclination ($\alpha$) with respect to the normal ($\overrightarrow{Ou}$) to said surface, and the lateral displacement (d) with respect to a discontinuity (18) formed on said surface, the detector comprising at least one Foucault current sensor having two coils ($B_1$, $B_2$) and incorporated in a measuring bridge ($R_1$, $R_2$) fed by a first signal, in which the coils are symmetrically disposed with respect to an axis ($\overrightarrow{Oa}$) contained in a plane normal to the surface (16) and passing through the discontinuity (18), and at least one continuous signal ($V_{ph}$, $V_s$, $V_d$) is generated as a function of the phase difference between the first signal and the signal ($V_b$) at the terminals of the coils, said continuous signal varying with one of said geometric quantities and being zero for a predetermined value of said quantity, and displacement of said element is controlled as a function of the said continuous signal or signals to assume a desired position having predetermined values ($h_0$, $\alpha_0$, $d_0$) for said geometric quantities (h, $\alpha$, d), characterized in that said continuous signal ($V_{ph}$, $V_s$, $V_d$) is generated by adding, to the signal ($V_b$) at the terminals of the coils, a signal ($V_0$) phase shifted by $\psi$ with respect to the first signal, and the phase of the resulting signal ($V_c$) is compared with that of the first signal in a phase discriminator (58) constructed such that, when the inputs are phase shifted by $\psi$, the output is zero.

2. Process according to claim 1, characterized in that said first signal comprises a sine wave whose frequency is 240 KHz.

3. Process according to either of claims 1 and 2, characterized in that the continuous signal ($V_{ph}$, $V_s$, $V_d$) becomes zero and changes its sign when the corresponding geometric quantity (h, $\alpha$, d) reaches said predetermined value corresponding to the value for said quantity at which one wishes to position said element, and in that the distance and sense of displacement of said element are determined by the intensity and sign of the continuous signal.

4. Process according to either of claims 1 and 2, characterized in that the curve of variation of the continuous signal or signals ($V_{ph}$, $V_s$, $V_d$) is a function of the corresponding value (h, $\alpha$, d), or a derivative curve thereof is memorized, the instantaneous value of the geometric quantity at which one wishes to be positioned is measured by determining the corresponding value of the continuous signal or signals, and this value is determined on the memorized variation curve.

5. Process according to claim 4 characterized in that displacement of said element is controlled as a function of the difference between said measured value and a stored value.

6. Process according to claim 1, characterized in that the continuous signal ($V_{ph}$, $V_s$, $V_d$) becomes zero or has a predetermined value when the magnitude of said geometric quantity (h, $\alpha$, d) reaches said given value, the value ($V_{p0}$) is measured for a third signal ($V_p$), representative of the position of the sensor (10) as a function of the quantity to be controlled, for which the continuous signal ($V_{ph}$, $V_s$, $V_d$) becomes zero or has said predetermined value, and in that said geometric quantity is measured, and the actual value of the third signal ($V_p$) is compared with the memorized value ($V_{p0}$) before commanding displacement of said element as a function of said measured value.

7. Process according to claim 3, applied to the positioning of said element with respect to a discontinuity (18) forming a line on said surface (16), characterized in that the continuous signal is a signal ($V_{ph}$) representative of the phase difference between the first signal supplying the measuring bridge and the signal ($V_b$) at the terminals of the coils ($B_1$, $B_2$) of the sensor, the displacement of the said element being carried out in a transverse direction with respect to the discontinuity, and the continuous signal becoming zero when the axis ($\overrightarrow{Oa}$) of the sensor is at a predetermined distance ($d_0$) from the centre of the discontinuity.

8. Process according to claim 3, applied to the positioning of said element with respect to the normal ($\overrightarrow{Ou}$) at a given point on the surface (16), characterized in that the continuous signal is a signal ($V_{ph}$) representative of the phase difference between the first signal supplying the measuring bridge and the signal ($V_b$) at the terminals of the coils ($B_1$, $B_2$) of the sensor, the displacement of the said element being a pivoting around an axis (42) contained in the plane perpendicular to the plane of the coils or to their plane of symmetry, and perpendicular to the axis ($\overrightarrow{Oa}$) of the sensor, the continuous signal becoming zero when the axis of the sensor forms a predetermined angle ($\alpha_0$) with the normal to the surface.

9. Process according to claim 3 applied to the positioning of said element with respect to the normal ($\overrightarrow{Ou}$) at a given point on the surface (16), characterized in that the continuous signal ($V_d$) corresponds to the difference between two intermediate signals ($V_{ph1}$, $V_{ph2}$), said latter signals being representative of phase differences between each of the signals ($V_{b1}$, $V_{b2}$) at the terminals of the coils ($B_1$, $B_2$) and the first signal feeding the measuring bridge, and in that the displacement of the said element is a pivoting around an axis (42) contained in the plane perpendicular to the plane of the coils ($B_1$, $B_2$), or to their plane of symmetry, and perpendicular to the axis ($\overrightarrow{Oa}$) of the sensor, the continuous signal becoming zero when the axis of the sensor forms a predetermined angle ($\alpha_0$) with the normal to the surface.

10. Process according to claim 3, applied to the positioning of said element at a given distance ($h_0$) from the surface (16), characterized in that the continuous signal is a signal ($V_d$) corresponding to the sum of two intermediate signals ($V_{ph1}$, $V_{ph2}$), said latter signals being representative of phase differences between each of the signals ($V_{b1}$, $V_{b2}$) at the terminals of the coils and the first signal feeding the measuring bridge, the displacement of the said element being effected in a longitudinal direction with respect to its axis, the continuous signal becoming zero when the detector (10) is at the said given distance ($h_0$) from the surface.

11. Process according to either of claims 4 and 5, applied to the lateral positioning (d) of said element with respect to a discontinuity (18) on said surface (16), characterized in that the continuous signal comprises a signal ($V_{ph}$) representative of the phase difference between the first signal, feeding the measuring bridge, and the signal ($V_b$) at the terminals of the coils ($B_1$, $B_2$) of the sensor, and a signal ($V_d$) corresponding to the difference between two intermediate signals ($V_{ph1}$, $V_{ph2}$), said latter signals being representative of phase differences between each of the signals ($V_{b1}$, $V_{b2}$) at the terminals of the coils and the first signal supplying the measuring bridge.

12. Process according to either of claims 4 and 5, applied to the angular positioning ($\alpha$) of said element with respect to the normal ($\overrightarrow{Ou}$) to the surface (16), characterized in that the continuous signal comprises a signal ($V_{ph}$) representative of the phase difference between the first signal feeding the measuring bridge and the signal ($V_b$) at the terminals of the coils ($B_1$, $B_2$) of the sensor, which varies with the angle of inclination ($\alpha$), and a signal ($V_s$) corresponding to the sum of two intermediate signals, said latter signals being representative of phase differences between each of the signals ($V_{b1}$, $V_{b2}$) at the terminals of the coils of the sensor and the first signal feeding the measuring bridge, said signal ($V_s$) varying with the distance (h) separating said element from the surface, and in that the variation curve is memorized for the signal representative of the phase difference as a function of the signal representative of the sum of signals for different values of the angle ($\alpha$).

13. Process according to either of claims 3 and 4, applied to the angular positioning ($\alpha$) of said element with respect to the normal ($\overrightarrow{Ou}$) to the surface (16), characterized in that the continuous signal is a signal ($V_{ph}$) representative of the phase difference between the first signal ($V_d$) corresponding to the phase difference between two intermediate signals ($V_{ph1}$, $V_{ph2}$), said latter signals being representative of phase differences between each of the signals ($V_{b1}$, $V_{b2}$) at the terminals of the coils and the first signal feeding the measuring bridge.

14. Process according to claim 6, applied to the angular positioning ($\alpha$) of the said element with respect to the normal ($\overrightarrow{Ou}$) at a given point on the surface (16), characterized in that the continuous signal is a signal ($V_{ph}$) representative of the phase difference between the first signal feeding the measuring bridge and the signal ($V_b$) at the terminals of the coils of the sensor, which varies with the angle of inclination ($\alpha$), and in that a signal ($V_p$) is memorized, representative of the position of the sensor corresponding to a known angle ($\alpha_0$) between its axis and the normal to the surface, for which the continuous signal has a given value, and in that the angle of inclination ($\alpha$) is measured by comparing the signal representative of the position of the sensor with the memorized value ($V_p$) of the signal.

15. Process according to claim 6, applied to the angular positioning ($\alpha$) of said element with respect to the normal ($\overrightarrow{Ou}$) at a given point on the surface (16), characterized in that the continuous signal is a signal ($V_d$) corresponding to the differences between two intermediate signals ($V_{ph1}$, $V_{ph2}$), said latter signals being representative of phase differences between each of the signals ($V_{b1}$, $V_{b2}$) at the terminals of the coils and the first signal feeding the measuring bridge, said signal ($V_d$) varying with the angle of inclination ($\alpha$), and in that a signal ($V_p$) is memorized, representative of the position of the sensor, corresponding to an angle ($\alpha_0$) made by its axis with the normal to the surface, for which the continuous signal has a given value, and in that the angle of inclination ($\alpha$) is measured by comparing the signal representative of the position of the sensor with the memorized value for said signal.

16. Process according to claim 6, applied to the positioning of said element with respect to a discontinuity (18) forming a line on the surface (16), characterized in that the continuous signal is a signal ($V_{ph}$) representative of the phase difference between the first signal feeding the measuring bridge and the signal ($V_b$) at the terminals of the coils of the sensor, which varies with the lateral distance (d) of said element from said discontinuity, and in that a signal is memorized representative of the position of the sensor corresponding to a known distance ($d_0$) of the axis of the sensor from the middle of the discontinuity for which the continuous signal has a given value, and in that the distance (d) is measured by comparing the signal representative of the position of the probe with the memorized value for said signal.

17. Process according to claim 6, applied to the positioning of the said element at a given distance (h) from the surface (16), characterized in that the continuous signal is a signal ($V_s$) corresponding to the sum of two intermediate signals, said latter signals being representative of phase differences between each of the signals ($V_{b1}$, $V_{b2}$) at the terminals of the coils of the sensor and the first signal feeding the measuring bridge, said signal ($V_s$) varying with the distance (h), and in that a signal is memorized representative of the position of the sensor corresponding to a known distance ($h_0$) separating the said element from the surface, for which the continuous signal has a given value, and in that the distance (h) is measured by comparing the signal representative of the position of the sensor with the memorized value of the signal.

18. Process according to either of claims 4 and 5, applied to the control of the distance (h) separating said element from the surface (16), characterized in that the continuous signal is a signal ($V_s$) corresponding to the sum of two intermediate signals, said latter signals being representative of the phase differences between each of the signals ($V_{b1}$, $V_{b2}$) at the terminals of the coils, and the first signal feeding the measuring bridge.

19. Process according to any one of claims 1 to 18, characterized in that the phase difference $\psi$ has a value of $\pi/2$.

20. Device for positioning an element with respect to a surface (14) by means of a Foucault current detector (10) more especially in accordance with at least one of three geometric quantities, viz. the distance (h) to said surface, the angle of inclination ($\alpha$) with respect to the normal to said surface, and the lateral displacement (d) with respect to a discontinuity (18) formed on said surface, the detector (10) comprising at least one Foucault current sensor having two coils ($B_1$, $B_2$) incorporated in a measuring bridge ($R_1$, $R_2$) fed by a first signal, the coils ($B_1$, $B_2$) being symmetrically disposed with respect to an axis contained in a plane normal to the surface and passing through the discontinuity, the device comprising processing means (88, 94, 102) delivering a continuous signal ($V_{ph}$, $V_s$, $V_d$) as a function of the phase difference between the first signal and the signal ($V_b$) at the terminals of the coils, said continuous signal varying with one of said geometric quantities (h, $\alpha$, d) and being zero for a predetermined value of said quantity, and means (92, M-100, M-110, $M_3$) controlling displacement of said element as a function of the second signal ($V_{ph}$, $V_s$, $V_d$), characterized in that the processing means (48) for adding, to the signal ($V_b$) at the terminals of the coils, a signal ($V_0$) corresponding to the signal introduced into the bridge, out of phase by $\psi$, and a phase discriminator (58), sensitive to the thus-obtained signal ($V_c$) and to the signal introduced into the measuring bridge, and delivering an output signal ($V_{ph}$, $V_s$, $V_d$) which is zero when its inputs are out of phase by $\psi$.

21. Device according to claim 20, characterized in that it comprises means (44) to deliver the first signal in the form of a sine wave whose frequency is 240 KHz.

22. Device according to either of claims 20 and 21, characterized in that the processing means (88) delivering the continuous signal or signals ($V_{ph}$, $V_s$, $V_d$) varying with the corresponding geometric quantity (h, $\alpha$, d) changing sign when the quantity reaches said predetermined value ($h_o$, $\alpha_o$, $d_o$) at which one wishes to position said element, and in that the command means (92, M) displace the detector by a distance and in a sense determined by the intensity and sign of the continuous signal ($V_{ph}$, $V_s$, $V_d$).

23. Device according to either of claims 20 and 21, characterized in that the processing means (94) delivering the continuous signal or signals ($V_{ph}$, $V_s$, $V_d$) which vary with the corresponding geometric quantity (h, $\alpha$, d) and become zero when said quantity reaches a predetermined value, means (96) being provided to memorize the variation curve of the second signal or signals ($V_{ph}$, $V_s$, $V_d$) as a function of the geometric quantity (h, $\alpha$, d) that one wishes to measure, and means (98) being provided to calculate the correction to be made with the aid of control means (100, M) by comparison of the instantaneous value of the continuous signal or signals ($V_{ph}$, $V_s$, $V_d$) determined by the processing means (94) with the memorized variation curve.

24. Device according to either of claims 20 and 21, characterized in that the processing means (102) deliver a continuous signal ($V_{ph}$, $V_s$, $V_d$) which varies with one of the geometric quantities (h, $\alpha$, d) becoming zero when said quantity becomes zero, means (R) being provided to deliver a third signal ($V_p$) representative of the position of the sensor (10) with respect to the geometric quantity (h, $\alpha$, d) one wishes to measure, means (104, 106) being provided to memorize the value ($V_{po}$) of said third signal for which the continuous signal ($V_{ph}$, $V_s$, $V_d$) becomes zero, and means (108) being provided to calculate the correaction to be made with the aid of control means (110, $M_3$) by comparison of the instantaneous value of the third signal ($V_p$) with the memorized value ($V_{po}$).

25. Device according to any one of claims 20 to 24, characterized in that means (56) are provided to shift the signal introduced into the measuring bridge before it has passed into the phase discriminator (58), whereby to control the value of the quantity to be measured ($\alpha$, d) for which the output signal ($V_{ph}$) becomes zero.

26. Device according to any one of claims 20 to 25, applicable to the lateral positioning (d) of said element with respect to a discontinuity (18) forming a line on said surface (14), characterized in that the means (92, M-100, M-110, M) for controlling displacement of said element comprise means ($M_2$, 34, 36) for displacing said element in a transverse direction with respect to said line, the output signal ($V_{ph}$) of the phase discriminator (58) becoming zero when the axis ($\overrightarrow{Oa}$) of the sensor passes the centre of the discontinuity.

27. Device according to any one of claims 20 to 25, applicable to the angular positioning ($\alpha$) of said element with respect to the normal ($\overrightarrow{Ou}$) to the surface, characterized in that the means (92, M-100, M-110, M) for controlling displacement of said element comprise means ($M_3$, 38, 40) for pivoting said element around an axis (42) perpendicular to the axis of the sensor, the output signal ($V_{ph}$) of the phase discriminator (58) becoming zero when the axis ($\overrightarrow{Oa}$) of the sensor coincides with the normal (Ou) to the surface.

28. Device according to any one of claims 20 to 24, characterized in that the processing means (88, 94, 102) comprise means (46) delivering alternately a signal representative of one or other of the signals ($V_{b1}$, $V_{b2}$) at the terminals of the coils ($B_1$, $B_2$) of the sensor (10) and of a signal proportional to and in phase with the signal introduced into the bridge, means (48) for adding to said signal, a signal corresponding to the signal introduced into the bridge phase shifted by $\pi/2$, means (52, 54) for transforming into logic signals the sum ($V_c$) thus obtained, as well as the signal introduced into the bridge, and a phase discriminator (58) sensitive to logic signals representative of the sum ($V_c$) and the signal introduced into the measuring bridge to deliver two output signals ($V_{ph1}$, $V_{ph2}$) which become zero when the quantity to be measured (h, $\alpha$) reaches said given value.

29. Device according to claim 28 characterized in that means (56) are provided to phase shift the logic signal representative of the signal introduced into the measuring bridge before it passes through the phase discriminator (58), whereby to control the value of the quantity to be measured (h, $\alpha$) for which the output signal ($V_{ph1}$, $V_{ph2}$) becomes zero.

30. Device according to either of claims 28 and 29, characterized in that means (86) are provided to calculate the sum ($V_s$) and the difference ($V_d$) of the output signals ($V_{ph1}$, $V_{ph2}$).

31. Device according to any one of claims 28 to 30, applicable to the positioning of said element at a given distance ($h_0$) from the surface, characterized in that the means (92, M-100, M-110, M) to control displacement of said element comprise means ($M_1$, 24, 26) for displacing said element in a vertical direction, the output signal ($V_s$) varying with the distance between the detector and the surface.

32. Device according to any one of claims 28 to 30, applicable to the angular positioning ($\alpha$) of said element with respect to the normal ($\overrightarrow{Ou}$) to the surface, characterized in that the means (92, M-100, M-110, M) to control displacement of said element comprise means ($M_3$, 34, 36) for pivoting said element around the normal ($\overrightarrow{Ou}$) to the surface, the output signal ($V_d$) varying with the angle ($\alpha$) between the axis ($\overrightarrow{Oa}$) of the detector and the normal ($\overrightarrow{Ou}$).

33. Device according to any one of claims 20 to 32, characterized in that the phase shift $\psi$ has a value of $\pi/2$.


## Ansprüche

1. Verfahren zum Anordnen einer Vorrichtung auf einer metallischen Fläche (16) mittels eines Foucaultstrom-Detektors (10) nach wenigstens einer der folgenden drei geometrischen Größen : der Entfernung (h) zu dieser Fläche, dem Neigungswinkel ($\alpha$) bezüglich der Normalen ($\overrightarrow{Ou}$) auf diese Fläche und dem seitlichen Abstand (d) bezüglich einer auf dieser Fläche gebildeten Unstetigkeit (18), wobei der Detektor wenigstens eine Focaultstrom-Sonde aufweist, die zwei zu einer von einem ersten Signal gespeisten Meßbrücke ($R_1$, $R_2$) zugehörige Spulen ($B_1$, $B_2$) umfaßt, gemäß dem die Spulen symmetrisch angeordnet werden bezüglich einer Achse ($\overrightarrow{Oa}$), die in einer zur Fläche (16) normal und durch die Unstetigkeit (18) verlaufenden Ebene enthalten ist, und gemäß dem wenigstens ein Dauersignal ($V_{ph}$, $V_s$, $V_d$) in Abhängigkeit von der Phasendifferenz zwischen dem ersten Signal und dem Signal ($V_b$) an den Klemmen der Spulen erzeugt wird, wobei dieses Dauersignal mit einer der geometrischen Größen variiert und für einen vorbestimmten Wert dieser Größe verschwindet, und gemäß dem die Verschiebung in Abhängigkeit des Wertes des oder der Dauersignale gesteuert wird, um der geometrischen Größe (h, $\alpha$, d), bei der angeordnet werden soll, den gewünschten Wert ($h_0$, $\alpha_0$, $d_0$) zu geben, dadurch gekennzeichnet, daß das Dauersignal ($V_{ph}$, $V_s$, $V_d$) erzeugt wird durch Hinzufügen eines bezüglich dem ersten Signal um $\varphi$ phasenverschobenen Signals ($V_0$) zu dem Signal ($V_b$), daß dann das so erhaltene Signal ($V_c$) mit dem ersten Signal einem Phasenvergleich unterworfen wird in einem Phasendiskriminator (58), der so entworfen ist, daß sein Ausgang Null ist, wenn seine Eingänge um $\varphi$ phasenverschoben sind.

2. Verfahren nach Anspruch 1, dadurch gekennzeichnet, daß das erste Signal ein sinusförmiges Signal ist, dessen Frequenz 240 kHz beträgt.

3. Verfahren nach Anspruch 1 oder 2, dadurch gekennzeichnet, daß das Dauersignal ($V_{ph}$, $V_s$, $V_d$) verschwindet und das Vorzeichen ändert, wenn die entsprechende geometrische Größe (h, $\alpha$, d) den vorgegebenen Wert ($H_0$, $\alpha_0$, $d_0$) erreicht, der dem Wert dieser Größe entspricht, bei dem die Vorrichtung angeordnet werden soll, und daß der Abstand und der Verschiebungssinn für die Vorrichtung durch die Intensität und das Vorzeichen des Dauersignals bestimmt werden.

4. Verfahren nach Anspruch 1 oder 2, dadurch gekennzeichnet, daß die Variationskurve des oder der Dauersignal ($V_{ph}$, $V_s$, $V_d$) oder eine abgeleitete Kurve in Abhängigkeit der entsprechenden Größe (h, $\alpha$, d) gespeichert wird und daß der momentane Wert der geometrischen Größe, bei dem angeordnet werden soll, gemessen wird durch den entsprechenden Wert des oder der Dauersignale und durch Übertragen dieses Wertes auf die gespeicherte Variationskurve.

5. Verfahren nach Anspruch 4, dadurch gekennzeichnet, daß die Verschiebung der Vorrichtung in Abhängigkeit von der Differenz zwischen dem gemessenen Wert und einem gespeichertem Wert gesteuert wird.

6. Verfahren nach Anspruch 1, dadurch gekennzeichnet, daß das Dauersignal ($V_{ph}$, $V_s$, $V_d$) verschwindet oder einen vorbestimmten Wert annimmt, wenn die entsprechende geometrische Größe (h, $\alpha$, d) den vorgegebenen Wert erreicht, und daß der Wert ($V_{p0}$) eines dritten Signales ($V_p$), das die Position der Sonde (10) darstellt, gespeichert wird in Abhängigkeit der einzustellenden Größe, für die das Dauersignal ($V_{ph}$, $V_s$, $V_d$) verschwindet oder den vorbestimmten Wert annimmt, und daß diese geometrische Größe gemessen wird durch Vergleich des reellen Wertes des dritten Signals ($V_p$) mit dem gespeicherten Wert ($V_{p0}$), bevor die Verschiebung der Vorrichtung in Abhängigkeit von diesem Meßwert gesteuert wird.

7. Verfahren nach Anspruch 3, das verwendet wird zum Anordnen der Vorrichtung bezüglich einer Unstetigkeit (18), die eine Linie auf der Fläche (16) bildet, dadurch gekennzeichnet, daß das Dauersignal ein die Phasendifferenz zwischen dem die Meßbrücke speisenden ersten Signal und dem Signal ($V_b$) an den Klemmen der Spulen ($B_1$, $B_2$) der Sonde darstellendes Signal ($V_{ph}$) ist, wobei sich die Verschiebung der Vorrichtung gemäß einer zu der Unstetigkeit quer verlaufenden Richtung vollzieht und das Dauersignal verschwindet, wenn die Achse ($\overrightarrow{Oa}$) der Sonde einen vorbestimmten Abstand ($d_0$) zur Mitte der Unstetigkeit aufweist.

8. Verfahren nach Anspruch 3, das angewendet wird zum Anordnen der Vorrichtung bezüglich der Normalen ($\overrightarrow{Ou}$) auf die Fläche (16) in einem vorgegebenen Punkt, dadurch gekennzeichnet, daß das Dauersignal ein die Phasendifferenz zwischen dem die Meßbrücke speisenden ersten Signal und dem Signal ($V_b$) an den Klemmen der Spulen ($B_1$, $B_2$) der Sonde darstellendes Signal ($V_{ph}$) ist, wobei die Verschiebung der Vorrichtung eine Drehung um eine Achse (42) ist, die in der senkrecht zur Ebene der Spulen oder zu ihrer senkrecht zu der Achse ($\overrightarrow{Oa}$) der Sonde verläuft, und das Dauersignal verschwindet, wenn die Achse der Sonde einen vorbestimmten Winkel ($\alpha_0$) mit der Normalen auf der Fläche bildet.

9. Verfahren nach Anspruch 3, das zum Anordnen der Vorrichtung bezüglich der Normalen ($\overrightarrow{Ou}$) auf die Fläche (16) in einem vorgegebenen Punkt angewendet wird, dadurch gekennzeichnet, daß das Dauersignal ein Signal ($V_d$) ist, das der Differenz zwischen zwei Zwischensignalen ($V_{ph1}$, $V_{ph2}$) enspricht, wobei diese Zwischensignale die Phasendifferenzen zwischen jedem der Signale ($V_{b1}$, $V_{b2}$) an den Klemmen der Spulen ($B_1$, $B_2$) und dem die Meßbrücke speisenden ersten Signal darstellen, und daß die Verschiebung der Vorrichtung eine Drehung um eine Achse (42) ist, die in der senkrecht zu der Ebene der Spulen ($B_1$, $B_2$) oder zu ihrer Symmetrieebene verlaufenden Ebene enthalten ist und senkrecht zu der Achse ($\overrightarrow{Oa}$) der Sonde verläuft, wobei das Dauersignal verschwindet, wenn die Achse der Sonde einen vorbestimmten Winkel ($\alpha_0$) mit der Normalen der Fläche bildet.

10. Verfahren nach Anspruch 3, das zum Anordnen der Vorrichtung in einem vorgegebenen Abstand ($h_0$) zu der Fläche (16) verwendet wird, dadurch gekennzeichnet, daß das Dauersignal ein der Summe ($V_d$) der beiden Zwischensignale ($V_{ph1}$, $V_{ph2}$) entsprechendes Signal ist, wobei diese Zwischensignale die Phasendifferenzen zwischen jedem der Signale ($V_{b1}$, $V_{b2}$) an den Klemmen der Spulen und dem die Meßbrücke speisenden ersten Signal darstellen und die Verschiebung der Vorrichtung gemäß einer längs zu ihrer Achse verlaufenden Richtung erfolgt, wobei das Dauersignal verschwindet, wenn sich der Detektor (10) in dem vorgegebenen Abstand ($h_0$) zu der Fläche befindet.

11. Verfahren nach Anspruch 4 oder 5, das zur seitlichen (d) Anordnung der Vorrichtung bezüglich einer auf der Fläche (16) gebildeten Unstetigkeit (18) angewendet wird, dadurch gekennzeichnet, daß das Dauersignal ein Signal ($V_{ph}$) enthält, das die Phasendifferenz zwischen dem die Meßbrücke speisenden ersten Signal und dem Signal ($V_b$) an den Klemmen der Spulen ($B_1$, $B_2$) der Sonde ($V_d$) enthält, das der Differenz zwischen zwei Zwischensignalen ($V_{ph1}$, $V_{ph2}$) entspricht, wobei diese Zwischensignale die Phasendifferenzen zwischen jedem der Signale ($V_{b1}$, $V_{b2}$) an den Klemmen der Spulen und dem die Meßbrücke speisenden ersten Signal darstellen.

12. Verfahren nach Anspruch 4 oder 5, das zum winkelmäßigem ($\alpha$) Anordnen der Vorrichtung bezüglich der Normalen ($\overrightarrow{Ou}$) auf die Fläche (16) angewendet wird, dadurch gekennzeichnet, daß das Dauersignal ein Signal ($V_{ph}$) enthält, das die Phasendifferenz zwischen dem die Meßbrücke speisenden ersten Signal und dem Signal ($V_b$) an den Klemmen der Spulen ($B_1$, $B_2$) der Sonde darstellt, und das mit dem Neigungswinkel ( ) variiert, und ein Signal ($V_s$) enthält, das der Summe der beiden Zwischensignale entspricht, wobei diese Zwischensignale die Phasendifferenzen zwischen jedem der Signale ($V_{b1}$, $V_{b2}$) an den Klemmen der Spule der Sonde und dem die Meßbrücke speisenden ersten Signal darstellen und das Signal ($V_s$) mit dem Abstand (h) zwischen der Vorrichtung und der Fläche variiert, und daß die Variationskurve des die Phasendifferenz darstellenden Signals in Abhängigkeit von der Summe der Signale gespeichert wird für unterschiedliche Werte des Winkels $\alpha$.

13. Verfahren nach Anspruch 3 oder 4, das angewendet wird zum winkelmäßigen ($\alpha$) Anordnen der Vorrichtung bezüglich der Normalen ($\overrightarrow{Ou}$) auf die Fläche (16), dadurch gekennzeichnet, daß das Dauersignal ein Signal ($V_{ph}$) ist, das die Phasendifferenz zwischen dem die Meßbrücke speisenden ersten Signal und einem der Differenz zwischen zwei Zwischensignalen ($V_{ph1}$, $V_{ph2}$) entsprechenden Signal ($V_d$) darstellt, wobei diese Zwischensignale die Phasendifferenzen zwischen jedem der Signale ($V_{b1}$, $V_{b2}$) an den Klemmen der Spulen und dem die Meßbrücke speisenden ersten Signal darstellen.

14. Verfahren nach Anspruch 6, das angewendet wird zum winkelmäßigen ($\alpha$) Anordnen der Vorrichtung bezüglich der Normalen ($\overrightarrow{Ou}$) in einem vorgegebenen Punkt auf der Fläche (16), dadurch gekennzeichnet, daß das Dauersignal ein Signal ($V_{ph}$) ist, das die Phasendifferenz zwischen dem die Meßbrücke speisenden ersten Signal und dem Signal ($V_b$) an den Klemmen der Spule der Sonde darstellt, das mit dem Neigungswinkel ($\alpha$) variiert, und daß ein Signal ($V_p$) gespeichert wird, das die einem bekannten Winkel ($\alpha_0$) entsprechende Position der Sonde darstellt, unter dem das Dauersignal einen gegebenen Wert aufweist, und daß der Neigungswinkel ($\alpha$) durch Vergleichen des die Position der Sonde darstellenden Signals mit dem gespeicherten Wert ($V_p$) dieses Signales gemessen wird.

15. Verfahren nach Anspruch 6, das auf das winkelmäßige ($\alpha$) Anordnen der Vorrichtung bezüglich der Normalen ($\overrightarrow{Ou}$) in einem vorgegebenen Punkt der Fläche (16) angewendet wird, dadurch gekennzeichnet, daß das Dauersignal ein Signal ($V_d$) ist, das der Differenz zwischen zwei Zwischensignalen ($V_{ph1}$, $V_{ph2}$) entspricht, wobei diese Zwischensignale die Phasendifferenzen zwischen jedem der Signale ($V_{b1}$, $V_{b2}$) an den Klemmen der Spulen und dem die Meßbrücke speisenden ersten Signal darstellen, wobei dieses Signal ($V_d$) mit dem Neigungswinkel ($\alpha$) variiert, und daß ein Signal ($V_p$) gespeichert wird,

das die einem zwischen ihrer Achse und der Normalen auf die Fläche gebildeten Winkel ($\alpha_0$) entsprechende Position der Sonde darstellt, für die das Dauersignal einen vorgegebenen Wert aufweist, und daß der Neigungswinkel ($\alpha$) durch Vergleichen des die Position der Sonde darstellenden Signals mit dem gespeicherten Wert dieses Signales gemessen wird.

16. Verfahren nach Anspruch 6, das angewendet wird auf das Anordnen der Vorrichtung bezüglich einer eine Linie auf der Fläche (16) bildenden Unstetigkeit (18), dadurch gekennzeichnet, daß das Dauersignal ein Signal ($V_{ph}$) ist, das die Phasendifferenz zwischen dem die Meßbrücke speisenden ersten Signal und dem Signal ($V_b$) an den Klemmen der Spulen der Sonde darstellt, das mit dem seitlichen Abstand (d) der Vorrichtung bezüglich der Unstetigkeit variiert, und daß ein Signal gespeichert wird, das eine einem bekannten Abstand ($d_0$) der Achse der Sonde bezüglich der Mitte der Unstetigkeit entsprechende Position der Sonde darstellt, für die das Dauersignal einen gegebenen Wert aufweist, und daß der Abstand (d) durch Vergleichen des die Position der Sonde darstellenden Signals mit dem gespeicherten Wert dieses Signals gemessen wird.

17. Verfahren nach Anspruch 6, das angewendet wird zum Anordnen der Vorrichtung in einem gegebenen Abstand (h) zu der Fläche (16), dadurch gekennzeichnet, daß das Dauersignal ein Signal ($V_s$) ist, das der Summe der zwei Zwischensignale entspricht, wobei diese Zwischensignale die Phasendifferenzen zwischen jedem der Signale ($V_{b1}$, $V_{b2}$) an den Klemmen der Spulen der Sonde und dem die Meßbrücke speisenden ersten Signal darstellen und dieses Signal ($V_s$) mit dem Abstand (h) variiert, daß das Signal gespeichert wird, das die einem bekannten Abstand ($h_0$) zwischen der Vorrichtung und der Fläche entsprechende Position der Sonde darstellt, für die das Dauersignal einen gegebenen Wert aufweist, und daß der Abstand (h) durch Vergleichen des die Position der Sonde darstellenden Signals mit dem gespeicherten Wert dieses Signals gemessen wird.

18. Verfahren nach Anspruch 4 oder 5, das angewendet wird zum Einstellen des Abstandes (h) zwischen der Vorrichtung und der Fläche (16), dadurch gekennzeichnet, daß das Dauersignal ein Signal ($V_s$) ist, das der Summe zweier Zwischensignale entspricht, wobei diese Zwischensignale die Phasendifferenzen zwischen jedem der Signale ($V_{b1}$, $V_{b2}$) an den Klemmen der Spulen und dem die Meßbrücke speisenden ersten Signal darstellen.

19. Verfahren nach einem der Ansprüche 1 bis 18, dadurch gekennzeichnet, daß der Phasenverschiebung ($\varphi$) der Wert $\pi/2$ gegeben wird.

20. Einrichtung zum Anordnen einer Vorrichtung bezüglich einer Fläche (14) mit Hilfe eines Foucaultstrom-Detektors (10), insbesondere gemäß einer der mindestens drei geometrischen Größen, nämlich dem Abstand (h) von dieser Fläche, dem Neigungswinkel ($\alpha$) bezüglich der Normalen auf diese Fläche und dem seitlichen Abstand (d) bezüglich einer auf dieser Fläche ausgebildeten Unstetigkeit, wobei der Detektor (10) wenigstens eine Foucaultstrom-Sonde aufweist, die zwei zu einer von einem ersten Signal gespeiste Meßbrücke gehörende Spulen ($B_1$, $B_2$) aufweist, wobei die Spulen ($B_1$, $B_2$) symmetrisch angeordnet sind bezüglich einer Achse, die in einer Normalebene auf die Fläche enthalten ist und durch die Unstetigkeit verläuft, und wobei die Einrichtung Bearveitungsvorrichtungen (88, 94, 102) aufweist, die ein Dauersignal ($V_{ph}$, $V_s$, $V_d$) in Abhängigkeit von der Phasendifferenz zwischen dem ersten Signal und dem Signal ($V_b$) an den Klemmen der Spulen liefern, wobei dieses Dauersignal mit einer der geometrischen Größen (h, $\alpha$, d) variiert und für einen gegebenen Wert dieser Größe verschwindet, und Vorrichtungen (92, M-100, M-110, $M_3$) aufweist zum Steuern der Verschiebung der Vorrichtung in Abhängigkeit von dem Wert des zweiten Signals ($V_{ph}$, $V_s$, $V_d$), dadurch gekennzeichnet, daß die Behandlungsvorrichtungen Vorrichtungen (48) aufweisen, um dem Signal ($V_b$) an den Klemmen der Spulen ein Signal ($V_0$) hinzuzufügen, das dem in die Brücke eingespeisten, um $\varphi$ phasenverschobenen Signal entspricht, und einen Phasendiskriminator (58) aufweisen, der auf das so erhaltene Signal ($V_c$) und auf das in die Meßbrücke eingespeiste Signal anspricht, um ein Ausgangssignal ($V_{ph}$, $V_s$, $V_d$) zu liefern, das verschwindet, wenn seine Eingänge um $\varphi$ gegeneinander phasenverschoben sind.

21. Einrichtung nach Anspruch 20, dadurch gekennzeichnet, daß sie Vorrichtung (44) aufweist, um das erste Signal in Form eines sinusförmigen Signals mit der Frequenz 240 kHz abzugeben.

22. Einrichtung nach Anspruch 20 oder 21, dadurch gekennzeichnet, daß die Bearbeitungsvorrichtungen (88) ein Dauersignal oder Dauersignale ($V_{ph}$, $V_s$, $V_d$) liefern, die mit der entsprechenden geometrischen Größe (h, $\alpha$, d) durch Vorzeichenwechsel variieren, wenn diese Größe den Wert ($h_0$, $\alpha_0$, $d_0$) erreichen, bei dem die Vorrichtung angeordnet werden soll, und daß die Steuervorrichtungen (92, M) den Detektor in einen Abstand und in einem Sinn verschieben, der durch die Intensität und das Vorzeichen des Dauersignals ($V_{ph}$, $V_s$, $V_d$) vorbestimmt ist.

23. Einrichtung nach Anspruch 20 oder 21, dadurch gekennzeichnet, daß die Behandlungsvorrichtungen (94) ein Dauersignal oder Dauersignale ($V_{ph}$, $V_s$, $V_d$) liefern, die mit der entsprechenden geometrischen Größe (h, $\alpha$, d) variieren und verschwinden, wenn diese Größe einen vorbestimmten Wert erreicht, wobei Vorrichtungen (96) vorgesehen sind, um die Variationskurve des oder der zweiten Signale ($V_{ph}$, $V_s$, $V_d$) in Abhängigkeit von der geometrischen Größe (h, $\alpha$, d) zu speichern, die eingestellt werden soll, und wobei Vorrichtungen (98) vorgesehen sind, um die Korrektur zu berechnen, die mittels Steuervorrichtungen (100, M) durchzuführen ist durch Vergleich des momentanen Wertes des oder der Dauersignale ($V_{ph}$, $V_s$, $V_d$), die durch die Bearbeitungsvorrichtungen (94) mit der gespeicherten Variationskurve bestimmt sind.

24. Einrichtung nach Anspruch 20 oder 21, dadurch gekennzeichnet, daß die Bearbeitungsvorrich-

tungen (102) ein Dauersignal ($V_{ph}$, $V_s$, $V_d$) liefern, das mit einer der geometrischen Größen (h, $\alpha$, d) variiert und verschwindet, wenn diese Größe verschwindet, wobei Vorrichtungen (R) vorgesehen sind, um ein drittes Signal ($V_p$) zu liefern, das die Position der Sonde (10) bezüglich der geometrischen Größe (h, $\alpha$, d) darstellt, die eingestellt werden soll, wobei Vorrichtungen (104, 106) vorgesehen sind, um den Wert ($V_{p0}$) dieses dritten Signals zu speichern, für den das Dauersignal ($V_{ph}$, $V_s$, $V_d$) verschwindet, und wobei Vorrichtungen (108) vorgesehen sind, um die Korrektur zu berechnen, die mittels Steuervorrichtungen (110, $M_3$) durchzuführen ist durch Vergleich des momentanen Wertes des dritten Signals ($V_p$) mit dem gespeicherten Wert ($V_{p0}$).

25. Einrichtung nach einem der Ansprüche 20 bis 24, dadurch gekennzeichnet, daß Vorrichtungen (56) vorgesehen sind, um das in die Meßbrücke eingespeiste Signal in der Phase zu verschieben, bevor es zu dem Phasendiskriminator (58) gelangt, um den Wert der zu messenden Größe ($\alpha$, d) einzustellen, für den das Ausgangssignal ($V_{ph}$) verschwindet.

26. Einrichtung nach einem der Ansprüche 20 bis 25, zum seitlichen (d) Positionieren der Vorrichtung bezüglich einer eine Linie auf der Fläche (14) bildenden Unstetigkeit (18), dadurch gekennzeichnet, daß die Vorrichtungen (92, M-100, M-110, M) zum Steuern der Verschiebung der Vorrichtung Vorrichtungen ($M_2$, 34, 36) aufweisen, um die Vorrichtung gemäß einer zu der Linie querverlaufenden Richtung zu verschieben, wobei das Ausgangssignal ($V_{ph}$) des Phasendiskriminators (58) verschwindet, wenn die Achse ($\overrightarrow{Oa}$) der Sonde die Mitte der Unstetigkeit passiert.

27. Einrichtung nach einem der Ansprüche 20 bis 25 zum winkelmäßigen ($\alpha$) Anordnen der Vorrichtung bezüglich der Normalen ($\overrightarrow{Ou}$) auf die Fläche, dadurch gekennzeichnet, daß die Vorrichtungen (92, M-100, M-110, M) zum Steuern der Verschiebung der Vorrichtung Vorrichtungen ($M_3$, 38, 40) aufweisen zum Drehen der Vorrichtung um eine senkrecht zur Achse der Sonde verlaufende Achse (42), wobei das Ausgangssignal ($V_{ph}$) des Phasendiskriminators (58) verschwindet, wenn die Achse ($\overrightarrow{Oa}$) der Sonde zusammenfällt mit der Normalen ($\overrightarrow{Ou}$) auf die Fläche.

28. Einrichtung nach einem der Ansprüche 20 bis 24, dadurch gekennzeichnet, daß die Bearbeitungsvorrichtungen (88, 94, 102) Vorrichtungen (46) aufweisen, die ein Signal liefern, das das eine oder das andere der Signale ($V_{b1}$, $V_{b2}$) an den Klemmen der Spulen ($B_1$, $B_2$) der Sonde (10) darstellt, und ein Signal liefern, das proportional zu und in Phase mit den in die Brücke eingespeisten Signal ist, Vorrichtungen (48) aufweisen, um diesem Signal ein Signal hinzuzufügen, das dem in die Brücke eingespeisten, um $\pi/2$ phasenverschobenen Signal entspricht, Vorrichtungen (52, 54) aufweisen, um die auf diese Weise erhaltene Summe ($V_c$) sowie das in die Brücke eingespeiste Signal in logische Signale umzuwandeln, und einen Phasendiskriminator (58) aufweisen, der auf die logischen Signale anspricht, die die Summe ($V_c$) und das in die Meßbrücke eingespeiste Signal darstellen, um zwei Ausgangssignale ($V_{ph1}$, $V_{ph2}$) zu liefern, die verschwinden, wenn die zu messende Größe (h, $\alpha$) den gegebenen Wert erreicht.

29. Einrichtung nach Anspruch 28, dadurch gekennzeichnet, daß Mittel (56) vorgesehen sind, um das das in die Meßbrücke eingespeiste Signal darstellende logische Signal in der Phase zu verschieben, bevor es zu dem Phasendiskriminator (58) gelangt, um den Wert der zu messenden Größe (h, $\alpha$) einzustellen, für den das Ausgangssignal ($V_{ph1}$, $V_{ph2}$) verschwindet.

30. Einrichtung nach Anspruch 28 oder 29, dadurch gekennzeichnet, daß Vorrichtungen (86) zum Berechnen der Summe ($V_s$) und der Differenz ($V_d$) der Ausgangssignale ($V_{ph1}$, $V_{ph2}$) vorgesehen sind.

31. Einrichtung nach einem der Ansprüche 28 bis 30 zum Anordnen der Vorrichtung in einem vorgegebenen Abstand ($h_0$) zu der Fläche, dadurch gekennzeichnet, daß die Vorrichtungen (92, M-100, M-110, M) zum Steuern der Verschiebung Vorrichtungen ($M_1$, 24, 26) zum Verschieben der Vorrichtung gemäß einer vertikalen Richtung aufweisen, wobei das Ausgangssignal ($V_s$) mit dem Abstand zwischen dem Detektor und der Fläche variiert.

32. Einrichtung nach einem der Ansprüche 28 bis 30 zum winkelmäßigen ($\alpha$) Anordnen der Vorrichtung bezüglich der Normalen ($\overrightarrow{Ou}$) auf die Fläche, dadurch gekennzeichnet, daß die Vorrichtungen (92, M-100, M-110, M) zum Steuern der Verschiebung der Vorrichtung Vorrichtungen ($M_3$, 34, 36) zum Verschwenken der Vorrichtung um die Normale ($\overrightarrow{Ou}$) auf die Fläche aufweisen, wobei das Ausgangssignal ($V_d$) mit dem Winkel ($\alpha$) zwischen der Achse ($\overrightarrow{Oa}$) des Detektors und der Normalen ($\overrightarrow{Ou}$) varriiert.

33. Einrichtung nach einem der Ansprüche 20 bis 32, dadurch gekennzeichnet, daß die Phasenverschiebung ($\varphi$) den Wert $\pi/2$ hat.

FIG. 1

FIG. 2

FIG. 3

FIG. 4

$V_{ph}$

0                                    $d$

# FIG. 5

$V_{ph}, V_d$

0                              $\alpha$

# FIG. 6

# FIG. 12

$V_{ph}$

$\alpha = -\alpha_0$

$d$

$\alpha = 0$

$\alpha = +\alpha_0$

FIG. 7

FIG. 10

4

FIG. 8_a

FIG. 8_b

FIG. 9

FIG. 11

# FIG. 13

# FIG. 14